# EUROPEAN PATENT APPLICATION

(11) **EP 2 695 854 A1**
(43) Date of publication of application: **12.02.2014**
(21) Application number: 13005248.3
(22) Date of filing: 26.12.2008
(51) Int. Cl.: C01B 3/38, B01J 19/24, C01B 3/48, H01M 8/06, B01J 23/46, H01M 8/10, B01J 37/02, B01J 35/04, B01J 35/02, B01J 21/04

(54) **Cylindrical steam reformer**

(30) Priority: 08.01.2008 JP 2008001720
(62) Divisional of application: 08869752.9
(71) Applicant: TOKYO GAS CO., LTD., Tokyo 105-8527 (JP)
(72) Inventor: Hisayuki, Itsuki, Tokyo, 105-8527 (JP); Hiroshi, Fujiki, Tokyo, 105-8527 (JP); Masaki, Hondo, Tokyo, 105-8527 (JP)
(74) Representative: Angerhausen, Christoph

(57) **Abstract**

A cylindrical steam reformer which has a reforming catalyst disposed in a gap between an inner and outer cylinder. Metal zigzag plate elements and metal planar plate elements are arranged alternately between the cylinders such that one metal planar plate element is positioned at the outer wall surface of the inner cylinder and another metal planar plate element at the inner wall surface of the outer cylinder. The walls of the cylinder and metal plates are brazed to form a honeycomb base material. A reforming catalyst is supported on the surface of the metal planar plate element on the outer wall surface-side of the inner cylinder, on the surface of each metal zigzag plate element, on the surface of each metal planar plate element and on the surface of the metal planar plate element on the inner wall surface-side of the outer cylinder.

## Description

This is a divisional of Canadian National Phase Patent Application Serial No. 2,711,433 having an international filing date of December 26, 2008.

### TECHNICAL FIELD

The present invention relates to a cylindrical steam reformer, and more specifically, to a cylindrical steam reformer wherein a honeycomb reforming catalyst is disposed in a gap between an inner cylinder and an outer cylinder, making up a double cylinder, and an integrated cylindrical hydrogen production apparatus wherein the cylindrical steam reformer is incorporated in a cylindrical hydrogen production apparatus having a reforming catalyst layer, a CO conversion catalyst layer, and a CO removal catalyst layer so as to serve as the reforming catalyst layer thereof.

It will be understood that any references to "the present invention" or the like in this specification may relate to subject-matter of this divisional or its parent.

### BACKGROUND TECHNOLOGY

In a hydrogen production apparatus for producing hydrogen as fuel of, for example, a polymer electrolyte fuel cell, use is made of a plurality of catalysts including a reforming catalyst, a CO conversion catalyst, and a CO removal catalyst. Because the reforming catalyst among those catalysts, in particular, is used at a high temperature not lower than 800°C, for example, at around 700°C, if reactors provided with those catalysts, respectively, are disposed as separate units, there will arise needs for pipes, thermal insulating material, and so forth, for providing connection between the respective reactors, so that complication in equipment configuration will result.

Accordingly, for the sake of simplification and miniaturization in the equipment configuration, a cylindrical hydrogen production apparatus wherein the reactors are integrated with each other (hereinafter referred to as "an integrated cylindrical hydrogen production apparatus" as appropriate) has been under consideration as described in, for example, WO 00/63114 A1, WO 02/098780A1, JP 2002-187705A, JP 2005-193135A, JP 2006-232611A, and JP 2007-112667A, respectively.

### DISCLOSURE OF THE INVENTION

### Problem to be Solved, by the Invention

In the integrated cylindrical hydrogen production apparatus, a reactor provided with the reforming catalyst is integrated with both a reactor provided with the CO conversion catalyst, and a reactor provided with the CO removal catalyst. Further, the reactor provided with the reforming catalyst is constructed by disposing the reforming catalyst in an annular ring-like layer formed between the inner cylinder and the outer cylinder, and for the reforming catalyst use is normally made of a granular reforming catalyst.

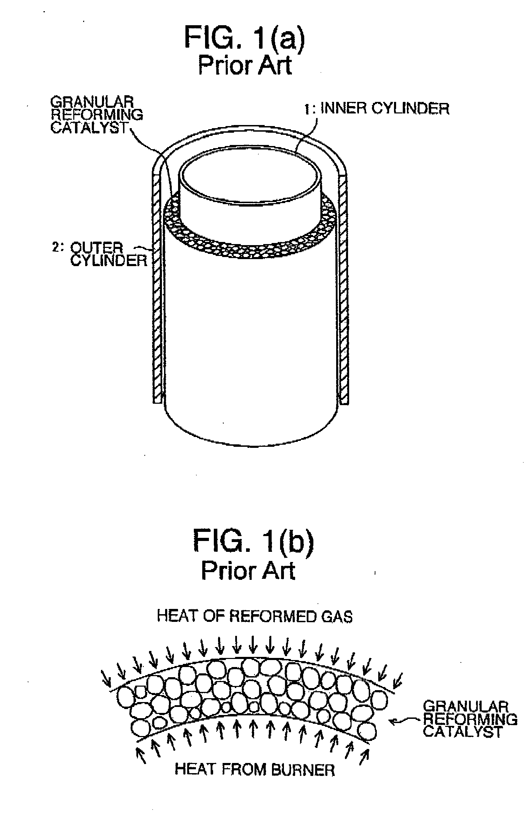

Figs. 1(a), 1(b) each are a view showing the reactor provided with the granular reforming catalyst, in which Fig. 1(b) is a partially enlarged view showing a part of the reactor in Fig. 1(a). As shown in Fig. 1(a), 1(b), the granular reforming catalyst is disposed in the annular ring-like layer between the inner cylinder and the outer cylinder. A burner (not shown) is disposed inside the inner cylinder. Raw fuel, that is, a mixed gas of fuel prior to reformation in the reforming catalyst layer, and steam is guided into the reforming catalyst layer from one end thereof. The raw fuel is reformed by steam by virtue of the reforming catalyst in the reforming catalyst layer, and guided out of the other end of the reforming catalyst layer as a preformed gas.

As described above, the reforming catalyst is put to use at high temperature, and in the case where a cylindrical hydrogen production apparatus is used in a home co-generation system with, for example, a polymer electrolyte fuel cell incorporated therein, it is necessary to frequently perform activation and stoppage. In consequence, if the granular reforming catalyst is used, the granular reforming catalyst with which the reforming catalyst layer is filled up will undergo collapse and pulverization due to repetition of rise / fall in temperature, and the like, thereby causing a problem of deterioration in catalytic activity.

Further, a reforming reaction with the use of a reforming catalyst is an endothermic reaction, and because of the enclothemmic reaction, there is the need for supplying heat from the outer wall side of the outer cylinder as well as from the inner wall surface side of the inner cylinder. Heat from the burner is supplied from the inner wall surface side of the inner cylinder, and heat of the reformed gas, that is, heat of gas that has undergone reformation is supplied from the outer wall side of the outer cylinder. An amount of heat supplied is dependent on a heat transfer area, thermal conductivity (namely, overall heat transfer coefficient), and temperature difference. Accordingly, with a reactor more excellent in thermal conductivity, the heat transfer area can be reduced provided that a temperature difference remains the same, so that miniaturization is enabled.

However, a film resistance between the granular reforming catalyst, and the outer wall surface of the inner cylinder, to which radiant heat from the burner is transferred, as well as a film resistance between the granular reforming catalyst, and the inner wall of the outer cylinder is high, so that it is hard for heat to be transferred. For this reason, use of a honeycomb reforming catalyst is under consideration in order to solve this problem. The honeycomb reforming catalyst is a catalyst formed by integrating a reforming catalyst with a fixed bed, that is, a catalyst supported on a base member of a honeycomb structure, as the fixed bed, namely, a honeycomb base member. The honeycomb reforming catalyst is also called a monolith reforming catalyst.

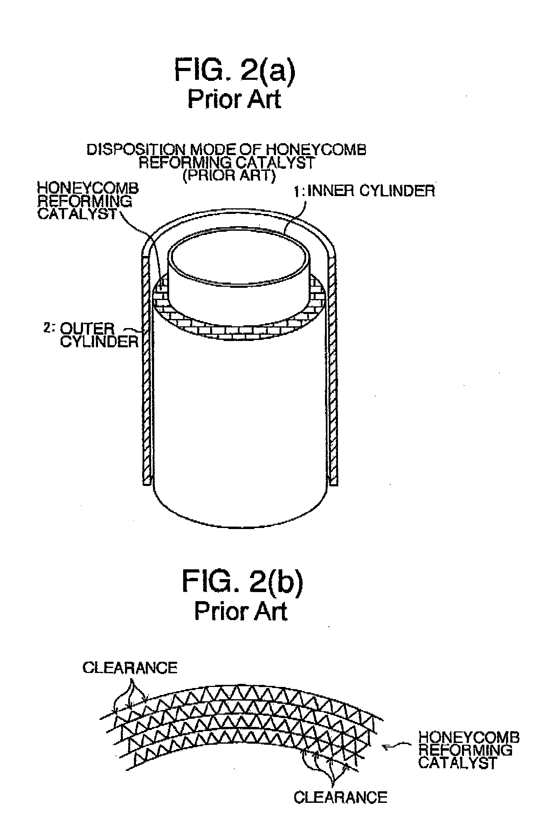

Figs. 2(a), 2(b) each are a view showing a mode wherein a honeycomb reforming catalyst is disposed. As shown in Fig. 2(a), the honeycomb reforming catalyst is disposed between an inner cylinder, and an outer cylinder. The honeycomb reforming catalyst is a catalyst on the honeycomb base member, that is, the base member having a multitude of parallel through-holes (a multitude of cells), wherein the reforming catalyst is supported on the respective surfaces of the cells. In the case of using the honeycomb reforming catalyst, subsidence of the catalyst does not occur upon heat displacement due to expansion / contraction, and so forth, of the inner and outer cylinders, respectively, so that it is possible to restrict subsidence / pulverization of catalyst particles, occurring to the granular reforming catalyst.

In this connection, the honeycomb reforming catalyst is normally fabricated as a separate unit on its own to be subsequently flitted into a gap between the inner and outer cylinders, whereupon the honeycomb reforming catalyst is disposed therein. However, it is not the case where corrugations of the honeycomb base member, in whole, will come into contact with the outer wall surface of the inner cylinder and the inner wall surface of the outer cylinder, respectively, but, as shown in Fig. 2(b), "an clearance" occurs between the outer wall surface of the inner cylinder, and some of the corrugations of the honeycomb base member as well as between the inner wall surface of the outer cylinder and some of the corrugations of the honeycomb base member. As a result, thermal conductitrity hardly differs from that in the case of the granular reforming catalyst.

When the inventor, et aL fabricated the honeycomb base member in view of their knowledge about the fact described as above, they attempted to improve manufacturing accuracy to thereby bring the honeycomb base member into absolute contact with the outer wall surface of the inner cylinder, and the inner wall surface of the outer cylinder, respectively, however, it was found out that if the constituent material of either of those cylinders was different from the constituent material of the honeycomb base member, an clearance was developed between the outer wall surface of the inner cylinder, and the honeycomb base member as well as between the inner wall surface of the outer cylinder and the honeycomb base member dne to a difference in thermal expansion coefficient, at the time of operation. In such a case, thermal conductivity from the outer wall surface of the inner cylinder to the honeycomb base member as well as thermal conductivity from the inner wall surface of the outer cylinder to the honeycomb base member underwent deterioration, so that heat required for a reforming reaction cannot be sufficiently transferred.

Further, in order to increase a contact area between the outer wall surface of the inner cylinder and the honeycomb base member as well as a contact area between the inner wall surface of the outer cylinder and the honeycomb base member an attempt was made to fit a honeycomb reforming catalyst in a doughnut-like shape between the inner cylinder, and the outer cylinder, however, it was found fairly difficult to fabricate the honeycomb base member in a doughnut-like shape at a satisfactory yield. More specifically samples of the honeycomb base member in the doughnut-like shape were fabricated, and a sample formed in a relatively good shape was selected out of those samples to be then fitted between the respective cylinders for testing, however, it was found out that a clearance was developed between the outer wall surface of the inner cylinder, and the honeycomb base member as well as between the inner wall surface of the outer cylinder and the honeycomb base member due to a difference in thermal expansion coefficient between respective members, occurring at the time of operation, so that the sample failed to lead to enhancement in thermal conductivity as was the case with the granular reforming catalyst.

In WO 02/098790 A1 as referred to in the foregoing, it is disclosed that, in a mode where the honeycomb reforming catalyst is disposed between the outer wall surface of the inner cylinder and the inner wall surface of the outer cylinder, a buffer member such as a wire mesh, and so forth, for use in absorbing heat displacement of a monolith reforming catalyst, is disposed between the honeycomb reforming catalyst, and the outer wall surface of the inner cylinder. However, the buffer member need have a predetermined thickness in view of the purpose for placement thereof, and for that reason, the buffer member will cause an increase in the size of a reforming catalyst layer rather than miniaturization thereof.

Accordingly, further testing and review were continuously carried out, and in a mode other than those modes described as above, (1) a honeycomb base member made up of a plurality of zigzag metal plates and a plurality of planar metal plates was disposed between the inner cylinder and the outer cylinder, subsequently applying a brazing process using a brazing metal thereto before fabrication, whereupon it was found out that the "clearance" described in the foregoing did not occur, thereby enabling thermal conductivity to be excellently improved. Further, (2) a honeycomb base member was formed so as to be in a sectional shape resembling the letter U with a flat bottom, whereupon it was similarly found out that the "clearance" did not occur, thereby enabling thermal conductivity to be excellently improved.

On the basis of those findings, and facts described as above, the present invention has solved those problems associated with the granular reforming catalyst, and the conventional honeycomb reforming catalyst.

It is therefore an object of the present invention to provide a cylindrical steam reformer capable of improving thermal conductivity without causing occurrence of "the clearance", wherein a honeycomb reforming catalyst is disposed in a gap between an inner cylinder, and an outer cylinder, making up a double cylinder, and another object of the present invention to provide an integrated cylindrical hydrogen production apparatus wherein the cylindrical steam reformer is incorporated in a cylindrical hydrogen production apparatus having a preforming catalyst layer, a CO conversion catalyst layer, and a CO removal catalyst layer.

### Means for Solving the Problem

In accordance with an aspect (1) of the present invention, there is provided a cylindrical steam reformer wherein a honeycomb reforming catalyst is disposed in a gap between an inner cylinder and an outer cylinder, making up a double cylinder, the honeycomb reforming catalyst being formed by causing a reforming catalyst to be supported on a honeycomb base member, said cylindrical seam reformer being fabricated by a process comprising the steps of (a) forming a unit element comprised of the inner cylinder, the outer cylinder, and the honeycomb base member wherein a plurality of zigzag metal plates, and a plurality of planar metal plates are alternately disposed such that the planar metal plate is positioned on an outer wall surface of the inner cylinder, and an inner wall surface of the outer cylinder, respectively, between the inner cylinder and the outer cylinder, (b) forming the honeycomb base member by applying a brazing process using a brazing metal to a contact region between the outer wall surface of the inner cylinder, and the planar metal plate, inside the unit element, contact regions between the planar metal plates, and the zigzag metal plates, alternately disposed, and a contact region between the planar metal plate, and the inner wall surface of the outer cylinder, and (c) causing the reforming catalyst to be supported on a surface of the planar metal plate, adjacent to the outer wall surface of the inner cylinder, surfaces of the respective zigzag metal plates, surfaces of the respective planar metal plates, a surface of the planar metal plate, adjacent to the inner wall surface of the outer cylinder, those plates making up the honeycomb base member.

In accordance with an aspect (2) of the present invention, there is provided a cylindrical steam reformer wherein a honeycomb reforming catalyst is disposed in a gap between an inner cylinder and an outer cylinder, making up a double cylinder, the honeycomb reforming catalyst being formed by causing a reforming catalyst to be supported on a honeycomb base member, said cylindrical steam reformer being fabricated by a process comprising the steps of (a) forming a unit element comprised of the inner cylinder, the outer cylinder, and the honeycomb base member wherein a plurality of zigzag metal plates, and a plurality of planar metal plates are alternately disposed such that the zigzag metal plate is positioned on an outer wall surface of the inner cylinder and an inner wall surface of the outer cylinder, respectively, between the inner cylinder and the outer cylinder, (b) forming the honeycomb base member by applying a brazing process using a brazing metal to a contact region between the outer wall surface of the inner cylinder, and the zigzag metal plate, inside the unit element, contact regions between the respective zigzag metal plates, and the respective planar metal plates, alternately disposed, and a contact region between the zigzag metal plate, and the inner wall surface of the outer cylinder, and (c) causing the reforming catalyst to be supported on the outer wall surface of the inner cylinder, surfaces of the respective zigzag metal plates as constituent members of the honeycomb base member, surfaces of the planar metal plates as the constituent members of the honeycomb base member, and the inner wall surface of the outer cylinder.

With the cylindrical steam reformer according to the aspect (1) or the aspect (2) of the present invention, a ferritic stainless steel may be used as the constituent material of the inner cylinder, the honeycomb base member, and the outer cylinder, respectively.

In accordance with an aspect (3) of the present invention, there is provided a cylindrical steam reformer wherein a honeycomb reforming catalyst is disposed in a gap between an inner cylinder and an outer cylinder, making up a double cylinder, the honeycomb reforming catalyst being formed by causing a reforming catalyst to be supported on a honeycomb base member, said cylindrical steam reformer being fabricated by a process comprising the steps of (a) forming a unit element comprised of the inner cylinder, the outer cylinder, and the honeycomb base member wherein a plurality of zigzag metal plates, and a plurality of planar metal plates are alternately disposed such that the planar metal plate is positioned on an outer wall surface of the inner cylinder, and an inner wall surface of the outer cylinder, respectively, between the inner cylinder and the outer cyinder, (b) forming the honeycomb base member by applying a brazing process using a brazing metal to a contact region between the outer wall surface of the inner cylinder, and the planar metal plate, inside the unit element, and contact regions between the respective planar metal plates, and the respective zigzag metal plates, alternately disposed, and (c) causing the reforming catalyst to be supported on a surface of the planar metal plate, adjacent to the outer wall surface of the inner cylinder, surfaces of the respective zigzag metal plates, surfaces of the plantar metal plates, and a surface of the planar metal plate, adjacent to the inner wall surface of the outer cylinder, those plates making up the honeycomb base members.

In accordance with an aspect (4) of the present invention, there is provided a cylindrical steam reformer wherein a honeycomb reforming catalyst is disposed in a gap between an inner cylinder and an outer cylinder, making up a double cylinder, the honeycomb reforming catalyst being formed by causing a reforming catalyst to be supported on a honeycomb base member, said cylindrical steam reformer being fabricated by a process comprising the steps of (a) forming a unit element comprised of the inner cylinder, the outer cylinder, and the honeycomb base member wherein a plurality of zigzag metal plates, and a plurality of planar metal plates are alternately disposed such that the zigzag metal plate is positioned on an outer wall surface of the inner cylinder, and an inner wall surface of the outer cylinder, respectively, between the inner cylinder and the outer cylinder, (b) fonning the honeycomb base member by applying a brazing process using a brazing metal to a contact region between the outer wall surface of the inner cylinder, and the zigzag metal plate, inside the unit element, and contact regions between the zigzag metal plates, and the planar metal plates, alternately disposed, and (c) causing the reforming catalyst to be supported on the outer wall surface of the inner cylinder, surfaces of the respective zigzag metal plates as constituent members of the honeycomb base member, surfaces of the planar metal plates as the constituent members of the honeycomb base member, and the inner surface wall of the outer cylinder.

With the cylindrical steam reformer according to the aspect (3) or the aspect (4) of the present invention, a ferritic stainless steel may be used as the constituent material of at least the inner cylinder as well as the honeycomb base member among the inner cylinder, the honeycomb base member, and the outer cylinder For the constituent material of the outer cylinder, use may be made of either the terrific stainless steel, or an austenitic stainless steeL

In accordance with an aspect (5) of the present invention, there is provided a cylindrical steam reformer wherein a honeycomb reforming catalyst is disposed in a gap between an inner cylinder and an outer cylinder, making up a double cylinder, the honeycomb reforming catalyst being formed by causing a reforming catalyst to be supported on a honeycomb base member, said cylindrical steam reformer being fabricated by a process comprising the steps of (a) forming a unit element comprised of an inner cylinder, an outer cylinder, and a honeycomb base member wherein a planar metal plate, a corrugated metal plate with respective ends in a cross-sectional shape resembling the letter U having a flat bottom, and a planar metal plate are disposed in that order between the inner cylinder and the outer cylinder, and (b) causing a reforming catalyst to be supported on a surface of the planar metal plate adjacent to the outer wall surface of the inner cylinder, a surface of the corrugated metal plate with the respective ends in a cross-sectional shape resembling the letter U having the flat bottom, and a surface of the planar metal plate adjacent to the inner wall of the outer cylinder, making up the honeycomb base member, within the unit element.

In accordance with an aspect (6) of the present invention, there is provided a cylindrical steam reformer wherein a honeycomb reforming catalyst is disposed in a gap between an inner cylinder and an outer cylinder, making up a double cylinder, the honeycomb reforming catalyst being formed by causing a reforming catalyst to be supported on a honeycomb base member, said cylindrical steam reformers being fabricated by a process comprising the steps of (a) forming a unit element comprised of an inner cylinder, an outer cylinder, and a honeycomb base member wherein a planar metal plate, a corrugated metal plate with respective ends in a cross-sectional shape resembling the letter U having a flat bottom, and a planar metal plate are disposed in that order between the inner cylinder and the outer cylinder, and (b) causing a reforming catalyst to be supported on a surface of the planar metal plate adjacent to the outer wall surface of the inner cylinder, a surface of the corrugated metal plate with the respective ends in a cross-sectional shape resembling the letter U having the flat bottom, a surface of the planar metal plate, a surface of the corrugated metal plate with the respective ends in a cross-sectional shape resembling the letter U having the flat bottom, and a surface of the planar metal plate adjacent the inner wall surface of the outer cylinder, making up the honeycomb base member, within the unit element.

With the cylindrical steam reformer according to the aspect (5) or the aspect (6) of the present invention, a ferritic stainless steel may be used as the constituent material of the inner cylinder, the honeycomb base member, and the outer cylinder, respectively.

In accordance with an aspect (7) of the present invention, there is provided an integrated cylindrical hydrogen production apparatus having a reforming catalyst layer, a CO conversion catalyst layer, and a CO removal catalyst layer, wherein the cylindrical steam reformer according to any one of the aspects (1) to (6) of the present invention is incorporated in the integrated cylindrical hydrogen production apparatus.

### Advantage of the Invention

The cylindrical steam reformer according to the present invention has advantageous effects described under items (a) to (e) as follows,
(a) Overall heat transfer coefficient can be excellently enhanced as compared with the case of using the granular reforming catalyst, more specifically, 1.3 times as high as that in the case of using the granular reforming catalyst,
(b) A heat transfer area can be cut back as compared with the case of using the granular reforming catalyst with a heat transfer amount remaining the same, more specifically, by about 30% as compared with the case of using the granular reforming catalyst,
(c) Variation in heat balance of the cylindrical steam reformer can be eliminated, thereby enabling the cylindrical steam reformer to be stably operated in the long term,
(d) Each Cell can be rendered smaller in size in an attempt to optimize the honeycomb reforming catalyst, and cell numbers, thereby reducing the heat transfer area,
(e) Miniaturization of the cylindrical steam reformer itself can be implemented by virtue of those advantageous effects under (a) to (d) as above.

### BRIEF DESCRIPTION OF THE DRAWINGS

Figs. 1(a), 1(b) each are a view showing a reactor provided with a granular reforming catalyst (prior art).
Figs. 2(a), 2(b) each are a view showing a mode wherein a honeycomb reforming catalyst is disposed (prior art).
Figs. 3(a) to 3(c) each are a view illustrating a process of fabricating a unit element according to an aspect (1) of the present invention, and a structure of the unit element.
Figs. 4(a) to 4(d) each are another view illustrating the process of fabricating the unit element according to the aspect (1) of the present invention, and the structure of the unit element.
Figs. 5(a) to 5(c) each are still another view illustrating the process of fabricating the unit element according to the aspect (1) of the present invention, and the structure of the unit element.
Figs. 6(a) to 6(c) each are a view illustrating a structure of a honeycomb reforming catalyst according to the aspect (1) of the present invention, and a cylindrical steam reformer having the structure of the honeycomb reforming catalyst.
Figs. 7(a) to 7(c) each are a view illustrating a structure of a honeycomb reforming catalyst according to an aspect (2) of the present invention, and a cylindrical steam reformer having the structure of the honeycomb reforming catalyst.
Figs. 8(a), 8(b) each are a view illustrating a process of fabricating a unit element according to an aspect (3) of the present invention, and a structure of the unit element.
Figs. 9(a), 9(b) each are another view illustrating the process of fabricating the unit element according to the aspect (3) of the present invention, and the structure of the unit element.
Figs. 10(a), 10(b) each are a view illustrating a structure of a honeycomb reforming catalyst according to an aspect (3) of the present invention, and a cylindrical steam reformer having the structure of the honeycomb reforming catalyst.
Figs. 11(a) to 11(c) each are another view illustrating the structure of the honeycomb reforming catalyst according to the aspect (3) of the present invention, and the cylindrical steam reformer having the structure of the honeycomb reforming catalyst.
Fig. 12 is still another view illustrating the structure of the honeycomb reforming catalyst according to the aspect (3) of the present invention, and the cylindrical steam reformer having the structure of the honeycomb reforming catalyst.
Fig. 13 is a view illustrating a structure of a honeycomb reforming catalyst according to an aspect (4) of the present invention, and a cylindrical steam reformer having the structure of the honeycomb reforming catalyst.
Fig, 14 is a longitudinal sectional view showing an embodiment of an integrated cylindrical hydrogen production apparatus having a reforming catalyst layer, a CO conversion catalyst layer, and a CO removal catalyst layer, wherein the cylindrical steam reformer according to the present invention is disposed.
Explanation of Reference Numerals
   1 Inner cylinder, The first cylinder
   2 Outer cylinder, The second cylinder
   3 The third cylinder
   4 The fourth cylinder
   5 Radiation cylinder
   6 Burner
   7 Top lid doubling as Burner fixing mount
   8 Bottom plate
   9 Exhaust passage
   10 Partition-wall
   16 Reforming catalyst layer
   17 Support plate of the reforming catalyst of reforming catalyst layer 16
   36 CO removal catalyst layer
   41,51,53 Planar metal plate
   42 Zigzag metal plate
   43,54 Cell (Parallel through-holes)
   52 Corrugated metal plate with respective ends in a cross-sectional shape resembling the letter U having a flat bottom

### BEST MODE FOR CARRYING OUT THE INVENTION

Embodiments of a cylindrical steam reformer according to respective aspects (1) to (6) of the present invention are described in sequence, including a process of fabricating the same. Features in common among the respective aspects (2) to (6) of the present invention will be described in parts of the present specification, concerning the aspect (1) of the present invention, as appropriate.

### (An embodiment of a cylindrical steam reformer according to the aspect (1) of the present invention)

The aspect (1) of the present invention is concerned with a cylindrical steam reformer fabricated by a process comprising the steps of (a) forming a unit element comprised of an inner cylinder, an outer cylinder, and a honeycomb base member wherein a plurality of zigzag metal plates, and a plurality of planar metal plates are alternately disposed such that the planar metal plates are positioned on an outer wall surface of the inner cylinder, and an inner wall surface of the outer cylinder, respectively, between the inner cylinder and the outer cylinder, (b) fabricating the honeycomb base member by applying a brazing process using a brazing metal to a contact region between the outer wall surface of the inner cylinder, and the planar metal plate, inside the unit element, contact regions between the planar metal plates, and the zigzag metal plates, alternately disposed, and a contact region between the planar metal plate, and the inner wall surface of the outer cylinder, and (c) causing a reforming catalyst to be supported on a surface of the planar metal plate, adjacent to an outer wall surface of the inner cylinder, surfaces of the respective zigzag metal plates, surfaces of the respective planar metal plates, and a surfaces of the respective planar metal plates, adjacent to the inner wall surface of the outer cylinder, those plates constituting the honeycomb base member.

### (The structure of a unit element according to the aspect (1) of the present invention, and a process of forming the same)

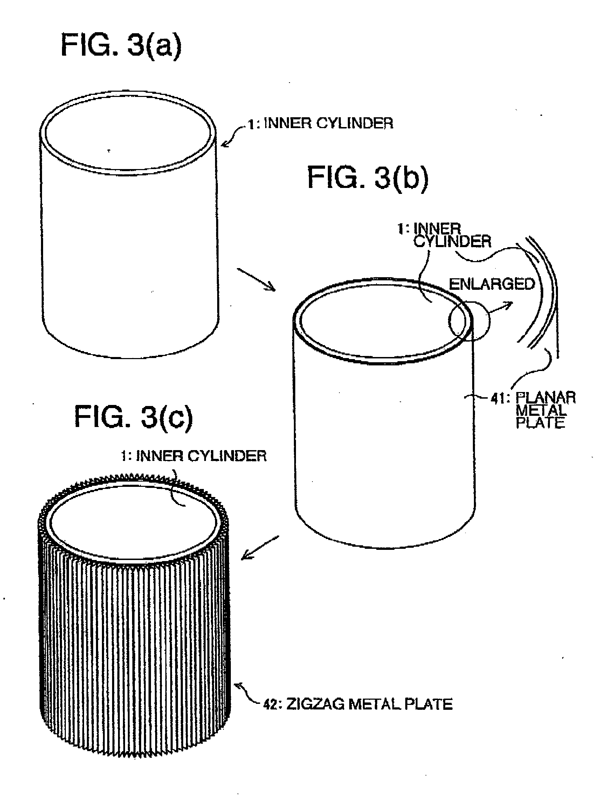

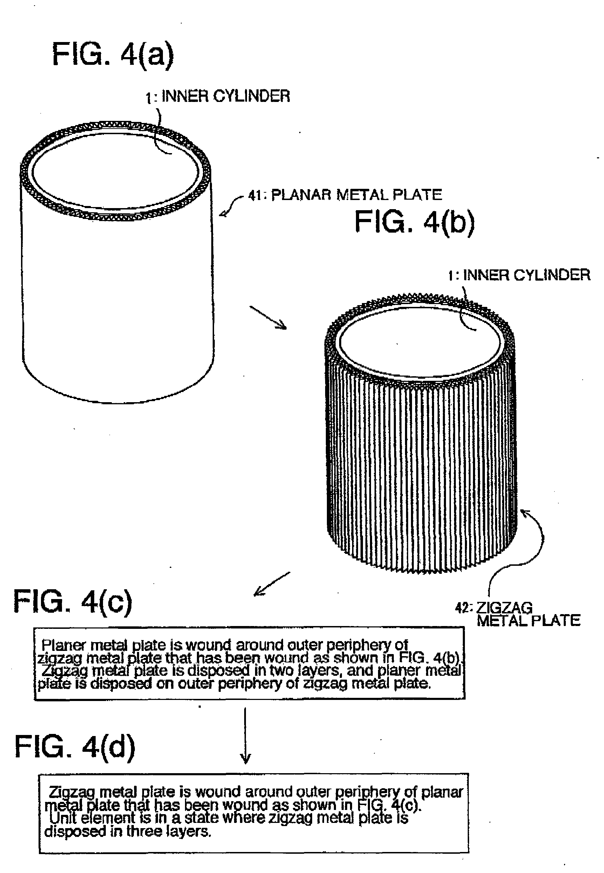

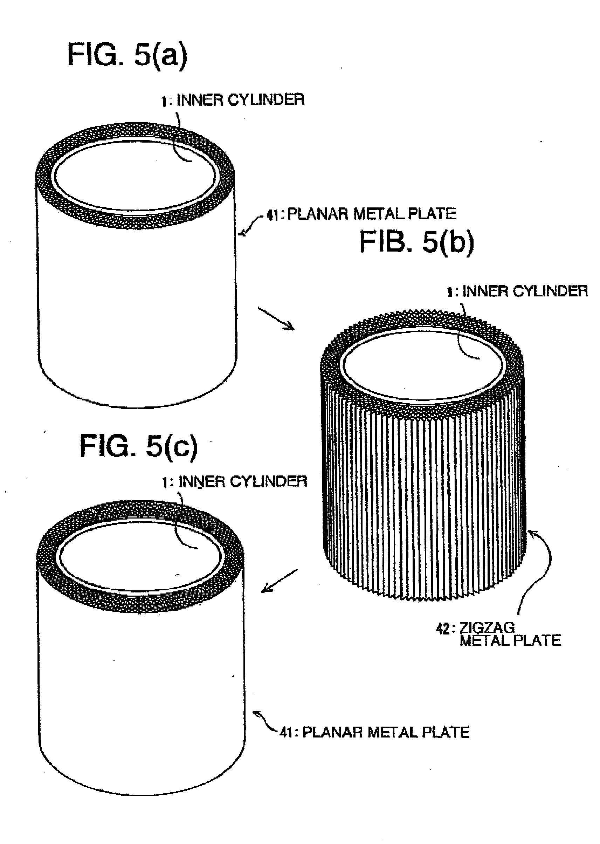

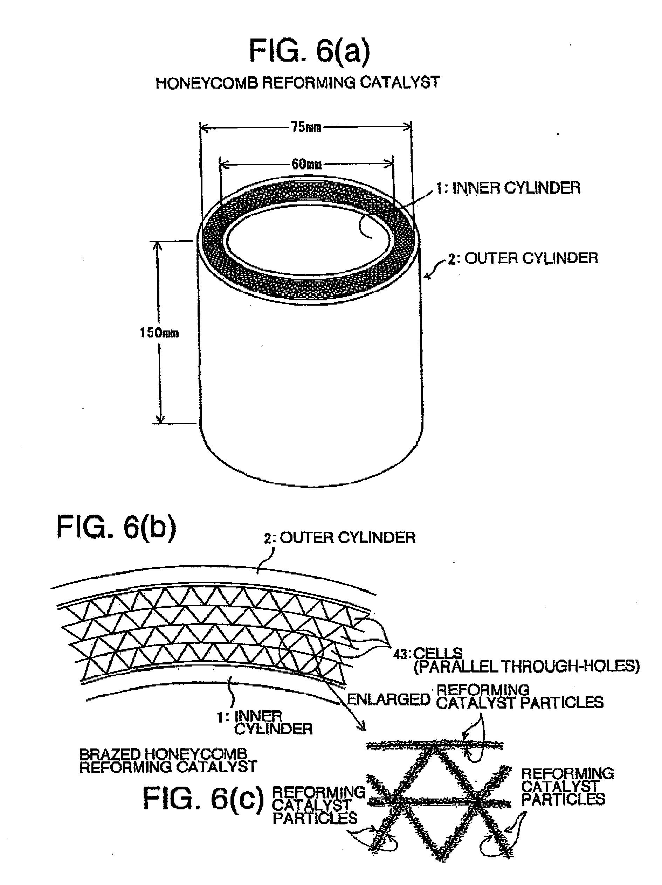

According to the aspect (1) of the present invention, there is formed the unit element comprised of the inner cylinder, the outer cylinder, and the honeycomb base member wherein the plurality of the zigzag metal plates, and the plurality of planar metal plates are alternately disposed such that the planar metal plate is positioned on a side of the honeycomb base member, adjacent to the outer wall surface of the inner cylinder, and on a side of the honeycomb base member, adjacent to the inner wall surface of the outer cylinder, respectively, between the inner cylinder and the outer cylinder. Figs. 3(a) - 3(c) to Figs. 5(a) - 5(c) each are a view illustrating a process of fabricating the unit element, and a structure of the unit element,. Fig. 3(a) shows an inner cylinder 1.
(1) First, a planar metal plate 41 is wound around the outer wall surface of the inner cylinder 1, as shown in Fig. 3(b).
(2) Next, a zigzag metal plate 42 is wound around the planer metal plate 41 that has been wound as above, as shown in Fig. 3(c).
(3) Next, another planer metal plate 41 is wound around the outer periphery of the zigzag metal plate 42 that has been wound as above, as shown in Fig. 4(a).
(4) Next, another zigzag metal plate 42 is wound around the outer periphery of the planer planar metal plate 41 that has been wound as above, as shown in Fig. 4(b).
(5) Next, still another planer metal plate 41 is wound around the outer periphery of the zigzag metal plate 42 that has been wound as above. The unit element is in a state where the zigzag metal plate is disposed in two layers, respectively, and the planer metal plate is disposed on the outer periphery of the zigzag metal plate (not shown).
(6) Next, still another zigzag metal plate 42 is wound around the outer periphery of the planar metal plate that has been wound as above. The unit element is in a state where the zigzag metal plate is disposed in three layers, respectively (not shown).
(7) Next, a further planer metal plate 41 is wound around the outer periphery of the zigzag metal plate that has been wound as above, as shown in Fig. 5(a).
(8) Next, a further zigzag metal plate 42 is wound around the outer periphery of the planar metal plate that has been wound as above, as shown in Fig. 5(b).
(9) Next, a still further planer metal plate 41 is wound around the outer periphery of the zigzag metal plate that has been wound as above, as shown in Fig. 5(c).
(10) Subsequently, an outer cylinder 2 is fitted onto an annular and layered structure in a state as shown in Fig. 5(c), thereby completing the unit element. An external appearance thereof is as shown in Fig. 6(a) referred to later on.

Thus, there is formed the unit element wherein the plurality of the planar metal plates, and the plurality of zigzag metal plates are alternately disposed between the outer wall surface of the inner cylinder, and the inner wall surface of the outer cylinder. The unit element, in this stage, has not gone through a subsequent process step (the brazing process using the brazing metal, applied to the unit element, according to the aspect (1) of the present invention) as yet, however, the unit element has already been structured such that a multitude of parallel through-holes, that is, cells 43 are formed between the respective surfaces of the planar metal plates, and the respective surfaces (in a cross-sectional shape resembling the letter (in a cross-sectional shape resembling the specific letter Λ, or the letter V) of the zigzag metal plates, as shown in Fig. 6(b) referred to later on. Further, since the planar metal plate is disposed on the outer wall surface of the inner cylinder, and the inner wall surface of the outer cylinder, respectively, the number of the planar metal plates is greater by one sheet than the number of the zigzag metal plates.

### (The brazing process using the brazing metal, applied to the unit element according to the aspect (1) of the present invention)

With the aspect (1) of the present invention, in the unit element structured as above, the brazing process using the brazing metal is applied to the contact region between the outer wall surface of the inner cylinder, and the planar metal plate, the contact regions between the planar metal plates, and the zigzag metal plates, following the contact region, a contact region between the zigzag metal plate, and the planar metal plate, ..., and a contact region between the planar metal plate and the inner wall surface of the outer cylinder, thereby completing the honeycomb base member.

By virtue of the brazing, it is possible to enhance adhesiveness in the contact region between the outer wall surface of the inner cylinder and the planar metal plate, and the contact region between the planar metal plate and the inner wall surface of the outer cylinder, in particular, among those contact regions described, thereby enabling heat from the inner wall surface of the outer cylinder as well as the outer wall surface of the inner cylinder to be efficiently transferred. Needless to say, adhesiveness, and thermal conductivity in the contact regions between the respective planar metal plates and the respective zigzag metal plates can be similarly enhanced, thereby enabling heat to be efficiently transferred.

Now, in connection with a relationship between the present invention, and the conventional technology, the brazing process using the brazing metal has been applied to an automobile exhaust gas treatment system, and so fourth. It is to be pointed out, however, that the main object of the brazing process in this case is to improve strength of the honeycomb base member itself, but it is not the case where the brazing process using the brazing metal is applied in order that the contact region between the outer wall surface of the inner cylinder and the planar metal plate, the contact region between the planar metal plate and the zigzag metal plate, ..., and the contact region between the planar metal plate and the inner wall surface of the outer cylinder are joined with each other, as is the case with the aspect (1) of the present invention. In this respect, the same can be said of a structure of a honeycomb reforming catalyst according to an aspect (2) of the present invention, and a cylindrical steam reformer having the structure of the honeycomb reforming catalyst.

There is no limitation to a manner in which the brazing process can be applied, however, the brazing can be implemented by sealing, for example, the inner wall surface of the inner cylinder of the unit element, the outer wall surface of the outer cylinder of the unit element, and the respective top surfaces of the inner cylinder, and the outer cylinder, among the top surfaces of the unit element, and subsequently, causing a molten brazing metal to flow into the multitude of the cells formed between the respective zigzag metal plates and the respective planar metal plates, that is, the parallel through-holes.

Furthermore, there is no limitation to the kind of a brazing metal for use, and the brazing metal can be selected as appropriate for use according to a type of the constituent material of the honeycomb base member as adopted. For example, the brazing metal can include a brazing alloy containing Ni, as specified in "JIS Z 3265 : 1998", and so forth, however, there is no limitation thereto.

### (Supporting of a reforming catalyst on the honeycomb base member according to the aspect (1) of the present invention)

With the aspect (1) of the present invention, a reforming catalyst is supported on the respective surfaces of the planar metal plates, and the respective surfaces of the zigzag metal plates, inside the honeycomb base member formed as above. With the aspect (1) of the present invention, because the planar metal plate is in contact with the outer wall surface of the inner cylinder, and the inner wall surface of the outer cylinder, respectively, the reforming catalyst is not supported on the outer wall surface of the inner cylinder, and the inner wall surface of the outer cylinder, respectively.

Reforming catalysts include a metal-based catalyst such as an Ni catalyst, Ru catalyst, and so forth, and various other types. For the present invention, use is made of a reforming catalyst selected out of those, as appropriate. The metal-based catalyst is normally supported on a carrier such as alumina, and so forth, before use.

Techniques for causing the reforming catalyst to be supported on the honeycomb base member are described hereinafter by taking the case of using an alumina carrier as an example. The techniques can include; (1) a method whereby alumina powders in a slurry state are supported by the honeycomb base member by use of, for example, the wash-coat method, and subsequently, a base member of the honeycomb structure supporting alumina is impregnated with an aqueous solution of a metal compound (a compound of a metal to serve as a metal catalyst) by use of, for example, the impregnation method, (2) a method whereby an aqueous solution of a metal compound (a compound of a metal to serve as a metal catalyst) is supported by alumina powders by use of, for example, the impregnation method to be then dried, and the alumina powders supporting the metal compound as obtained, in a slurry state, is supported by the honeycomb base member by use of, for example, the wash-coat method, and so forth. Thereafter, drying is performed by a routine method, thereby effecting calcination.

Upon application of the wash-coat method, and the impregnation method, parts of the unit element after brazed are sealed in advance, more specifically, the parts including the inner wall surface of the inner cylinder of the unit element and the outer wall surface of the outer cylinder of the unit element, the respective top surfaces of the inner cylinder and the outer cylinder, among the top surfaces of the unit element, and the respective bottom surfaces of the inner cylinder and the outer cylinder, among the bottom surfaces of the unit element. In this connection, the wash-coat method is a method for causing alumina powders, or alumina powders supporting the metal compound to be deposited on the surfaces making up the respective cells inside the unit element by, for example, immersing the unit element in the slurry so as to be shaken as if something is washed therein. Since the cells each are made up of the surfaces of the zigzag metal plate, in a cross-sectional shape resembling the specific letter Λ, or the letter V, and the surface of the planar metal plate, the cells each are in a cross-sectional shape resembling a triangle Δ, or an inverted triangle ∇. In the present specification, those surfaces forming each cell is also referred to as "inner surfaces of the cell".

### (The structure of a honeycomb reforming catalyst according to the aspect (1) of the present invention)

Figs. 6(a) to 6(c) each are a view illustrating the structure of a honeycomb reforming catalyst made up as above, and the cylindrical steam reformer having the structure of the honeycomb reforming catalyst. Fig. 6(a) is a perspective view of the honeycomb reforming catalyst, and Fig. 6(b) is a partially enlarged cross-sectional view thereof. In the case of an example shown in Fig. 6(a), the diameter of the outer periphery of the inner cylinder is about 60mm, the diameter of the inner periphery of the outer cylinder is about 75mm, the height of the inner cylinder as well as the outer cylinder is about 150mm, and 5 sheets of the planar metal plates, and 4 sheets of the zigzag metal plates are disposed between the inner cylinder and the outer cylinder in such a way as to be alternately, and annularly stacked one after another. Further, the honeycomb reforming catalyst is structured such that the contact region between the inner cylinder and the planar metal plate, the contact regions between the planar metal plate and the zigzag metal plate, and the contact region between the planar metal plate and the outer cylinder are all joined with each other by brazing while the reforming catalyst is supported on the surface of each of the zigzag metal plates, and the surface of each of the planar metal plates.

Fig. 6(c) is a partially enlarged view of a portion of Fig. 6(b), showing reforming catalyst particles in as-supported state. As shown in Fig. 6(c), the reforming catalyst particles are supported on the inner surfaces of each of the cells made up by the respective planar metal plates, together with the respective zigzag metal plates, making up the honeycomb base member.

Now, in the case of the example shown in Figs. 6(a) to 6(c), the 5 sheets of the planar metal plates, and the 4 sheets of the zigzag metal plates are disposed between the inner cylinder and the outer cylinder in such a way as to be alternately, and annularly stacked one after another. However, if one sheet of the zigzag metal plate as well as the planar metal plate are added thereto with the diameter of the inner cylinder, the diameter of the outer cylinder, and the height thereof remaining the same, thereby alternately and annularly stacking 6 sheets of the planar metal plates, and 5 sheets of the zigzag metal plates one after another between the inner cylinder and the outer cylinder, this will enable the number of the cells to be increased to that extent, so that individual cells (the parallel through-holes) can be reduced in size, and therefore, thermal conductivity between the planar metal plate, and the zigzag metal plate can be enhanced.

With the cylindrical steam reformer having the structure of the honeycomb reforming catalyst according to the aspect (1) of the present invention, the diameter of the inner cylinder, the diameter of the outer cylinder, and the height thereof can be set as appropriate according to a necessary production quantity of hydrogen. For example, the diameter of the outer periphery of the inner cylinder can be set in a range of 40 to 80mm, the diameter of the inner periphery of the outer cylinder in a range of 60 to 100mm, and the height of the inner cylinder as well as the outer cylinder in a range of 100 to 200mm, as appropriate. Furthermore, as to the planar metal plates and the zigzag metal plates, alternately stacked one after another, the number of either of those metal plates can be set as appropriate, for example, 3 to 7 sheets of the planar metal plates, and 2 to 6 sheets of the zigzag metal plates, amounting to 5 to 13 sheets in total. With the aspect (1) of the present invention, the planar metal plate is disposed on a side of the unit element, adjacent to the outer wall surface of the inner cylinder, and on a side of the unit element, adjacent to the inner wall surface of the outer cylinder, respectively, so that the number of the planar metal plates is greater by one sheet than the number of the zigzag metal plates.

The honeycomb reforming catalyst having the structure made up as above, and the cylindrical steam reformer having the structure of the honeycomb reforming catalyst can be used either in a vertical position, or a horizontal position, however, preferably used in the vertical position. In the case of the vertical position being adopted, (a) a mixed gas of a raw fuel, and steam is guided into the honeycomb reforming catalyst from an upper end side thereof, thereby guiding out a reformed gas enriched in hydrogen out of a lower end side thereof, or (b) the mixed gas of the raw fuel, and steam is guided into the honeycomb reforming catalyst from the lower end side thereof, thereby guiding out the reformed gas enriched in hydrogen out of the upper end side thereof. In these respects, the same can be said of a honeycomb reforming catalyst according to any one of aspects 2 to 6 of the present invention.

### (An embodiment of a cylindrical steam reformer according to the aspect (2) of the present invention)

The aspect (2) of the present invention is concerned with a cylindrical steam reformer fabricated by a process comprising the steps of (a) forming a unit element comprised of an inner cylinder, an outer cylinder, and a honeycomb base member wherein a plurality of zigzag metal plates, and a plurality of planar metal plates are alternately disposed such that the zigzag metal plates are positioned on an outer wall surface of the inner cylinder, and an inner wall surface of the outer cylinder, respectively, between the inner cylinder and the outer cylinder, (b) fabricating the honeycomb base member by applying a brazing process using a brazing metal to a contact region between the outer wall surface of the inner cylinder, and the zigzag metal plate, inside the unit element, contact regions between the zigzag metal plates, and the planar metal plates, alternately disposed, and a contact region between the planar metal plate, and the inner wall surface of the outer cylinder, and (c) causing a reforming catalyst to be supported on the outer wall surface of the inner cylinder, surfaces of the respective zigzag metal plates constituting the honeycomb base member, surfaces of the respective planar metal plates constituting the honeycomb base member, and the inner wall surface of the outer cylinder.

### (The structure of a unit element according to the aspect (2) of the present invention, and a process of forming the same)

In place of the embodiment of (the structure of the unit element according to the aspect (1) of the present invention, and a process of forming the same) described in the foregoing, there may be adopted another embodiment of the invention, wherein a zigzag metal plate is first wound around the inner cylinder, a planar metal plate is then wound around the zigzag metal plate, thereafter, another zigzag metal plate, another planar metal plate, still another zigzag metal plate, ..., and a planer metal plate are alternately disposed in sequence, thereby forming the unit element by fitting the outer cylinder onto the zigzag metal plate in the outermost layer. This represents the embodiment of the unit element according to the aspect (2) of the present invention.

With the unit element according to the aspect (2) of the present invention, the zigzag metal plate is disposed on the outer wall surface of the inner cylinder, and the inner wall surface of the outer cylinder, respectively, so that the number of the zigzag metal plates is greater by one sheet than the number of the planar metal plates. Further, the unit element according to the aspect (2) of the present invention has a structure wherein a multitude of parallel through-holes, that is, cells are made up between the outer wall surface of the inner cylinder, and the surface of the zigzag metal plate, between the surface of each of the planar metal plates, and the surface of each of the zigzag metal plates, and between the surface of the zigzag metal plate, and the inner wall surface of the outer cylinder. Since the cells each are made up between the outer wall surface of the inner cylinder, and the surface of the zigzag metal plate, in a cross-sectional shape resembling the specific letterΛ, or the letter V, between the surface of the zigzag metal plate, in a cross-sectional shape resembling the specific letter A, or the letter V, and the surface of the planar metal plate, and between the surface of the zigzag metal plate, in a cross-sectional shape resembling the specific letter Λ, or the letter V, and the inner wall surface of the outer cylinder, the respective cells each have a cross-sectional shape resembling a triangle Δ, or an inverted triangle ∇.

### (The brazing process using the brazing metal, applied to the unit element according to the aspect (2) of the present invention)

With the aspect (2) of the present invention, in the unit element having the structure described as above, the brazing process using the brazing metal is applied to a contact region between the outer wall surface of the inner cylinder and the zigzag metal plate, contact regions between the respective planar metal plates sequentially and alternately following thereto, and the respective zigzag metal plates, ..., and a contact region between the zigzag metal plate and the inner wall surface of the outer cylinder, thereby completing the honeycomb base member. As for a manner in which the brazing process using the brazing metal is applied, and the kind of a brazing metal for use, the same requirements as those in the case of (the brazing process using the brazing metal, applied to the unit element according to the aspect (1) of the present invention) described in the foregoing will apply.

### (Supporting of a reforming catalyst on the honeycomb base member according to the aspect (2) of the present invention)

A reforming catalyst is supported on the inner surfaces of each of the cells, in the brazed unit element formed as above, that is, on the inner wall surface of the inner cylinder, surfaces of the respective zigzag metal plates, surfaces of the respective planar metal plates, and the inner wall surface of the outer cylinder. With the aspect (2) of the present invention, the cell is made up between the outer wall surface of the inner cylinder, and the surface of the zigzag metal plate disposed on the outer wall surface thereof as well as between the inner wall surface of the outer cylinder, and the surface of the zigzag metal plate disposed on the inner wall surface thereof, so that the reforming catalyst is also supported on the outer wall surface of the inner cylinder, and the inner wall surface of the outer cylinder. As for the type of the reforming catalyst for use, and techniques for causing the reforming catalyst to be supported on the honeycomb base member, the same requirements as those in the case of (supporting of a reforming catalyst on the honeycomb base member according to the aspect (1) of the present invention) described in the foregoing will apply.

### (The structure of a honeycomb reforming catalyst according to the aspect (2) of the present invention)

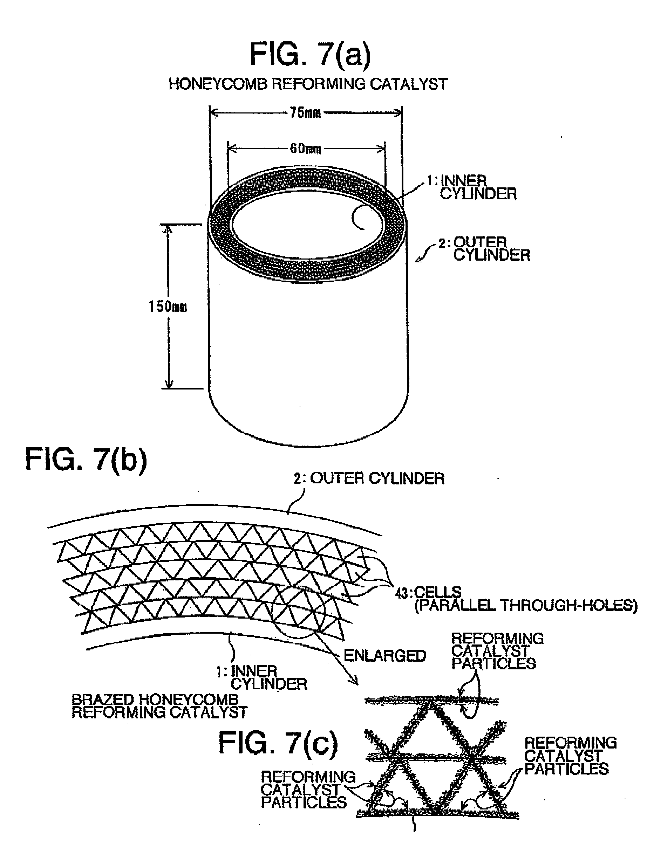

Figs. 7(a) to 7(c) each are a view illustrating the structure of a honeycomb reforming catalyst made up as above, and the cylindrical steam reformer having the structure of the honeycomb reforming catalyst. Fig. 7(a) is a perspective view of the honeycomb reforming catalyst, and Fig. 7(b) is a partially enlarged cross-sectional view thereof. In the case of an example shown in Fig. 7(a), the diameter of the outer periphery of the inner cylinder is about 60mm, the diameter of the inner periphery of the outer cylinder is about 75mm, the height of the inner cylinder as well as the outer cylinder is about 150mm, and 5 sheets of the zigzag metal plates, and 4 sheets of the planar metal plates are disposed between the inner cylinder and the outer cylinder in such a way as to be alternately, and annularly stacked one after another.

Further, the honeycomb reforming catalyst is structured such that the contact region between the outer wall surface of the inner cylinder and the zigzag metal plate, the contact regions between the zigzag metal plate and the planar metal plate, and the contact region between the zigzag metal plate and the inner wall of the outer cylinder are all joined with each other by brazing while the reforming catalyst is supported on the outer wall surface of the inner cylinder, the surface of each of the zigzag metal plates, the surface of each of the planar metal plates, and the inner wall surface of the outer cylinder.

In the case of the cylindrical steam reformer having the structure of the honeycomb reforming catalyst according to the aspect (2) of the present invention, and the cylindrical steam reformer having the structure of the honeycomb reforming catalyst, the diameter of the inner cylinder, the diameter of the outer cylinder, and the height thereof can be set as appropriate according to a necessary production quantity of hydrogen. For example, the diameter of the outer periphery of the inner cylinder can be set in a range of 40 to 80mm, the diameter of the inner periphery of the outer cylinder in a range of 60 to 100mm, and the height of the inner cylinder as well as the outer cylinder in a range of 100 to 200mm, as appropriate. Furthermore, as to the planar metal plates and the zigzag metal plates, alternately stacked one after another, the number of either of those metal plates can be set as appropriate, for example, 3 to 7sheets of the planar metal plates, and 2 to 6 sheets of the zigzag metal plates, amounting to 5 to 13 sheets in total.

### (An embodiment of a cylindrical steam reformer according to an aspect (3) of the present invention)

The aspect (3) of the present invention is concerned with a cylindrical steam reformer fabricated by a process comprising the steps of (a) forming a unit element comprised of an inner cylinder, an outer cylinder, and a honeycomb base member wherein a plurality of zigzag metal plates, and a plurality of planar metal plates are alternately disposed such that the planar metal plates are positioned on an outer wall surface of the inner cylinder, and an inner wall surface of the outer cylinder, respectively, between the inner cylinder and the outer cylinder, (b) fabricating the honeycomb base member by applying a brazing process using a brazing metal to a contact region between the outer wall surface of the inner cylinder, and the planar metal plate, inside the unit element, and contact regions between the planar metal plates, and the zigzag metal plates, alternately disposed, and (c) causing a reforming catalyst to be supported on a surface of the planar metal plate, adjacent to an outer wall surface of the inner cylinder, surfaces of the respective zigzag metal plates, surfaces of the respective planar metal plates, and a surfaces of the respective planar metal plates, adjacent to the inner wall surface of the outer cylinder, those plates constituting the honeycomb base member.

As described in the step (b) among the steps (a) to (c), in the case of the cylindrical steam reformer according to the aspect (1) of the present invention, the regions for application of the brazing process using the brazing metal are the contact region between the outer wall surface of the inner cylinder, and the planar metal plate, inside the unit element, the contact regions between the planar metal plates, and the zigzag metal plates, alternately disposed, and the contact region between the planar metal plate, and the inner wall surface of the outer cylinder, the honeycomb base member being fabricated by brazing of those regions.

In contrast to the above, in the case of the cylindrical steam reformer according to the aspect (3) of the present invention, the brazing process using the brazing metal is applied to the contact region between the outer wall surface of the inner cylinder, and the planar metal plate, inside the unit element, and the contact regions between the planar metal plates, and the zigzag metal plates, alternately disposed, as described in the step (b), thereby completing the honeycomb base member.

More specifically, with the cylindrical steam reformer according to the aspect (3) of the present invention, the regions for application of the brazing process using the brazing metal are the contact region between the outer wall surface of the inner cylinder, and the planar metal plate, inside the unit element, the contact regions between the planar metal plates, and the zigzag metal plates, alternately disposed however, the brazing process is not applied to the contact region between the planar metal plate, and the inner wall surface of the outer cylinder.

### (A configuration wherein no brazing process is applied to the contact region between the planar metal plate, and the inner wall surface of the outer cylinder)

In the case where the reforming catalyst was a granular reforming catalyst, an austenitic stainless steel was used as the constituent material of the outer cylinder as well as the inner cylinder in the past. In contrast, with the present invention, a ferritic stainless steel can be used for the constituent materials of the inner cylinder, and the outer cylinder respectively, as is the case with the honeycomb base member.

In the case of using dissimilar materials such as, for example, the austenitic stainless steel, and the ferritic stainless steel, a degree of expansion, or contraction occurring thereto at the time of activating, or stopping the cylindrical steam reformer will differ from each other due to a difference in thermal expansion coefficient therebetween, thereby causing a problem such as separation, cracking, and so forth, occurring to brazed parts. However, if the same material as the constituent material of the honeycomb base member is used as the constituent material of the inner cylinder, and the outer cylinder, respectively, the problem described can be avoided.

Further, even jf the ferritic stainless steel is used as the constituent material of the honeycomb base member as well as the inner cylinder, and the outer cylinder, a difference in degree of expansion, or contraction will result if temperature varies, so that there exists a concern about the same problem described as above. More specifically, there can be the case where the temperature of the outer cylinder positioned further away from a heating part (a burner) is lower than that of the inner cylinder positioned closer to the heating part.

Accordingly, with the aspect (3) of the present invention, since there can be the case where the temperature of the outer cylinder positioned further away from the heating part (the burner) is lower as compared with the temperature of the inner cylinder, and the temperature of the honeycomb base member, the planar metal plate at the outermost part of the unit element is kept free from the inner wall surface of the outer cylinder without applying the brazing process to the contact region between the planar metal plate at the outermost part of the unit element, and the inner wall surface of the outer cylinder thereby avoiding the problem arising due to such a difference in temperature.

Thus, if the brazing process is not applied to the contact region between the planar metal plate at the outermost part of the unit element, and the inner wall surface of the outer cylinder, thereby keeping those members free from each other, the necessity can be obviated that the same material as the constituent material of the honeycomb base member; such as for, example, the ferritic stainless steel, is used for the constituent material of the outer cylinder as well as that of the inner cylinder.

In other respects, the configuration is the same as that of (the cylindrical steam reformer according to the aspect (1) of the present invention).

### (An embodiment of a cylindrical steam reformer according to the aspect (4) of the present invention)

The aspect (4) of the present invention is concerned with a cylindrical steam reformer fabricated by a process comprising the steps of (a) forming a unit element comprised of an inner cylinder, an outer cylinder, and a honeycomb base member wherein a plurality of zigzag metal plates, and a plurality of planar metal plates are alternately disposed such that the zigzag metal plates are positioned on an outer wall surface of the inner cylinder, and an inner wall surface of the outer cylinder, respectively, between the inner cylinder and the outer cylinder, (b) fabricating the honeycomb base member by applying a brazing process using a brazing metal to a contact region between the outer wall surface of the inner cylinder, and the zigzag metal plate, inside the unit element, and contact regions between the zigzag metal plates, and the planar metal plates, alternately disposed, and (c) causing a reforming catalyst to be supported on the outer wall surface of the inner cylinder, surfaces of the respective zigzag metal plates constituting the honeycomb base member, surfaces of the respective planar metal plates constituting the honeycomb base member, and the inner wall surface of the outer cylinder.

As described in the step (b) among the steps (a) to (c), in the case of the cylindrical steam reformer according to the aspect (2) of the present invention, the regions for application of the brazing process using the brazing metal are the contact region between the outer wall surface of the inner cylinder, and the zigzag metal plate, inside the unit element, the contact regions between the zigzag metal plates, and the planar metal plates, alternately disposed, and the contact region between the zigzag metal plate, and the inner wall surface of the outer cylinder, the honeycomb base member being fabricated by brazing of those regions.

In contrast to the above, in the case of the cylindrical steam reformer according to the aspect (4) of the present invention, the brazing process using the brazing metal is applied to the contact region between the outer wall surface of the inner cylinder, and the zigzag metal plate, inside the unit element, and the contact regions between the zigzag metal plates, and the planar metal plates, alternately disposed, as described in the step (b), thereby completing the honeycomb base member.

More specifically, with the cylindrical steam reformer according to the aspect (4) of the present invention, the regions for application of the brazing process using the brazing metal are the contact region between the outer wall surface of the inner cylinder and the zigzag metal plate, inside the unit element, the contact regions between the zigzag metal plates, and the planar metal plates, alternately disposed, however, the brazing process is not applied to the contact region between the zigzag metal plate, and the inner wall surface of the outer cylinder.

In other respects, the configuration is the same as that of the cylindrical steam reformer according to the aspect (2) of the present invention.

Further, technical significance that the brazing process is not applied to the contact region between the zigzag metal plate, and the inner wall surface of the outer cylinder is similar to the technical significance of (the configuration where no brazing process is applied to the contact region between the planar metal plate, and the inner wall surface of the outer cylinder) described in (the embodiment of a cylindrical steam reformer according to the aspect (3) of the present invention).

### (An embodiment of a cylindrical steam reformer according to the aspect (5) of the present invention)

A cylindrical steam reformer according to the aspect (5) of the present invention is fabricated by a process comprising the steps of (a) forming a unit element comprised of an inner cylinder, an outer cylinder, and a honeycomb base member wherein a planar metal plate, a corrugated metal plate with respective ends in a cross-sectional shape resembling the letter U having a flat bottom, and a planar metal plate are disposed in that order between the inner cylinder and the outer cylinder, and (b) causing a reforming catalyst to be supported on a surface of the planar metal plate, a surface of the corrugated metal plate with the respective ends in a cross-sectional shape resembling the letter U having the flat bottom, and a surface of the planar metal plate, making up the honeycomb base member, within the unit element.

### (The structure of the unit element according to the aspect (5) of the present invention, and a process of forming the same)

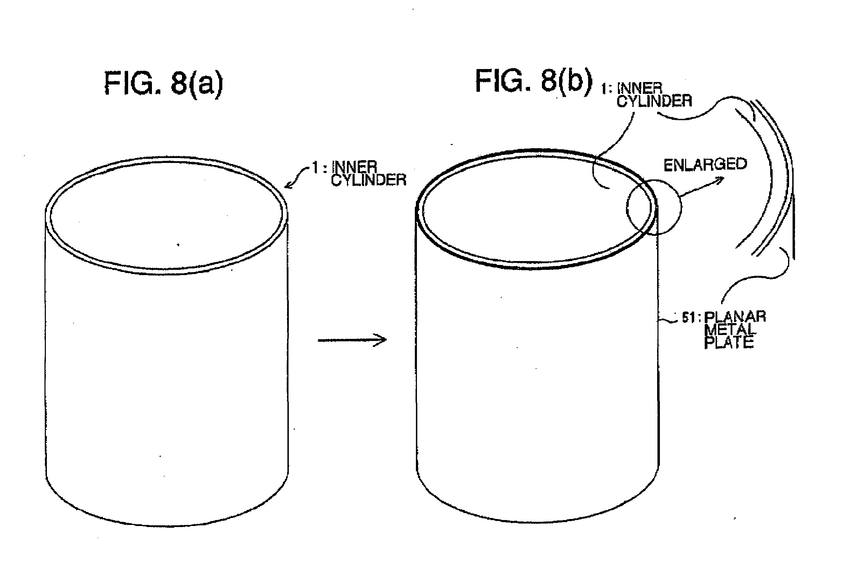

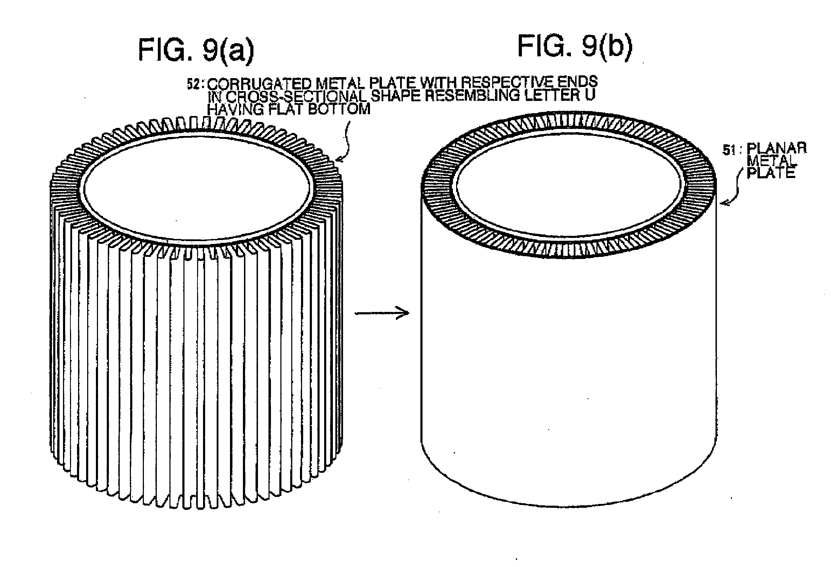

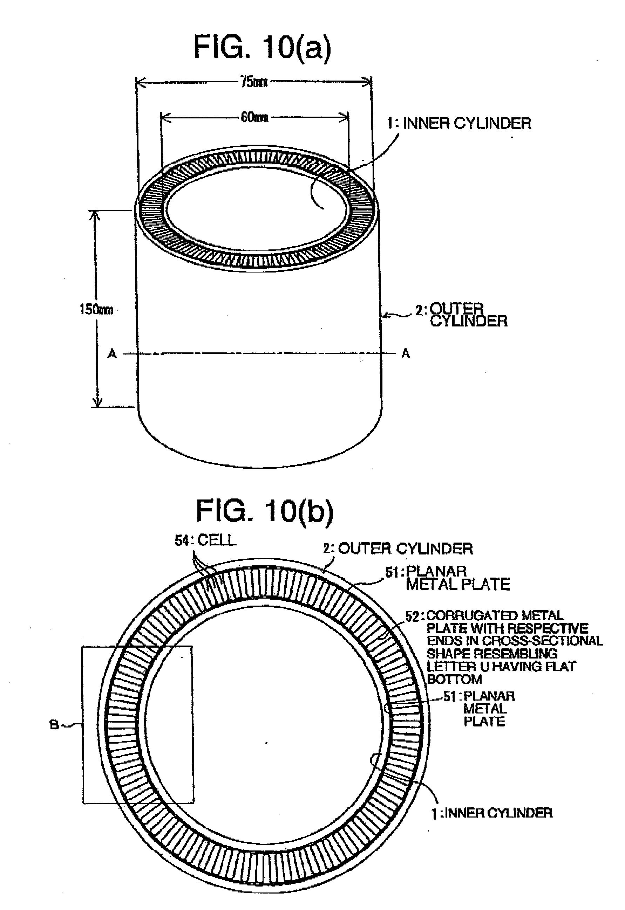

With the aspect (5) of the present invention, there is formed the unit element comprised of the inner cylinder, the outer cylinder, and the honeycomb base member wherein the planar metal plate, the corrugated metal plate with the respective ends in a cross-sectional shape resembling the letter U having the flat bottom, and the planar metal plate are disposed in that order between the inner cylinder and the outer cylinder. Figs. 8(a), 8(b) to Fig. 12 each are a view illustrating a process of forming the unit element, and a structure thereof, in which Figs. 10(a), 10(b) to Fig. 12 each are also a view illustrating the structure of the honeycomb reforming catalyst according to the aspect (5) of the present invention, and the cylindrical steam reformer having the structure of the honeycomb reforming catalyst. Fig. 8(a) shows an inner cylinder 1.
(1) Fist, a planar metal plate 51 is wound around the outer wall surface of the inner cylinder 1, as shown in Fig. 8(b).
(2) Next, a corrugated metal plate 52 with respective ends in a cross-sectional shape resembling the letter U having a flat bottom, is wound around the outer periphery of the planer metal plate 51 that has been wound as above, as shown in Fig. 9(a).
(3) Next, a planer metal plate 53 is wound around the outer periphery of the corrugated metal plate 52 with the respective ends in a cross-sectional shape resembling the letter U having the flat bottom, wound as above, as shown in Fig. 9(b).
(4) Subsequently, an outer cylinder 2 is fitted onto an annular and layered structure in a state as shown in Fig. 9(b), thereby completing the unit element. Figs. 10(a), 10(b) show the state of the unit element.

Fig. 10(a) is a perspective view, and Fig. 10(b) is a cross-sectional view taken on line A- A of Fig. 10(a). In Fig. 10(a), the top surface and the bottom surface have the same structure as that shown in the cross-sectional view taken on the line A - A. Thus, there is formed the unit element comprised of the inner cylinder, the outer cylinder, and the honeycomb base member wherein the planar metal plate, the corrugated metal plate with the respective ends in a cross-sectional shape resembling the letter U having the flat bottom, and the planar metal plate are disposed in that order between the inner cylinder and the outer cylinder. That is, the honeycomb base member is formed by disposing the planar metal plate, the corrugated metal plate 52 with the respective ends in a cross-sectional shape resembling the letter U having the flat bottom, and the planar metal plate in that order, and a combination of the inner cylinder, the outer cylinder, and the honeycomb base member is called as the unit element.

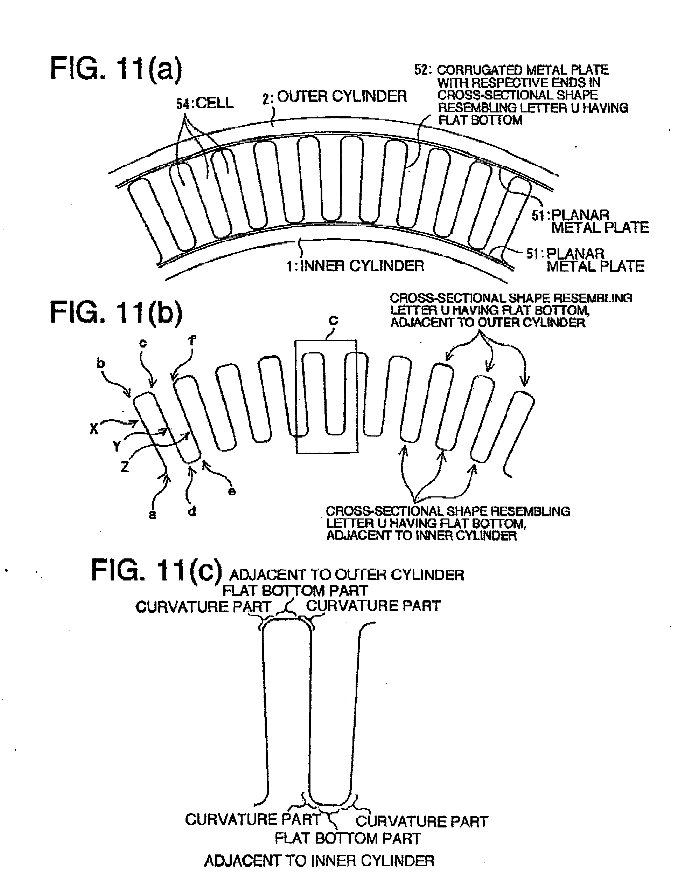

Fig. 11(a) to 11 (c) each are a view illustrating the structure of the unit element, and are also a view illustrating the structure of the honeycomb reforming catalyst according to the aspect (5) of the present invention, and the cylindrical steam reformer having the structure of the honeycomb reforming catalyst. Fig. 11(a) is an enlarged view showing a portion of the unit element, within a frame B in Fig. 10(b), Fig. 11(b) a partially cutaway view of "the corrugated metal plate with the respective ends in a cross-sectional shape resembling the letter U having the flat bottom" of Fig. 11(a), and Fig. 11(c) is an enlarged view showing a portion of the unit element, within a frame C of Fig. 11(b). Further, Fig. 11(b) shows the portion of the unit element slightly enlarged as compared with Fig. 11(a).

As shown in Fig. 11(a), the planar metal plate 51 is disposed on the outer periphery of the inner cylinder 1, the corrugated metal plate 62 with the respective ends in a cross-sectional shape resembling the letter U having the flat bottom is disposed on the outer periphery of the planer metal plate 51, and the outer cylinder 2 is disposed on the planer metal plate 51, thereby completing the unit element. Then, the unit element is structured such that a multitude of parallel through-holes, that is, cells 54 are made up among the planar metal plate 51, the corrugated metal plate 52 with the respective ends in a cross-sectional shape resembling the letter U having the flat bottom, and the planer metal plate 51.

As shown in Figs. 11(b), 11(c), the corrugated metal plate 52 with the respective ends in a cross-sectional shape resembling the letter U having the flat bottom is a corrugated metal plate formed by bending ends thereof, in cross section, adjacent to the inner cylinder, in such a way as to resemble the letter U having a flat bottom, and bending ends thereof, in cross section, adjacent to the outer cylinder, in such a way as to resemble the letter U having a flat bottom. More specifically, the corrugated metal plate 52 is formed by curvilinearly bending a metal plate at respective bent points in Fig. 11(b), such as a, b, c, d, e, f, ..., so forth.

Thus, the corrugated metal plate 52 with the respective ends in a cross-sectional shape resembling the letter U having the flat bottom is structured such that both the respective ends thereof, adjacent to the inner cylinder, and the respective ends thereof, adjacent to the outer cylinder, are in a cross-sectional shape resembling the letter U, and as shown in Fig. 11(c), the flat bottom of the letter U is planar as indicated by "a flat bottom part" in Fig. 11(c), and is provided with curvature parts on both sides thereof. More specifically, it is essential that bottom sections of the corrugated metal plate with the respective ends in a cross-sectional shape resembling the letter U having the flat bottom are to be planar, that is, a flat bottom. This is what is meant by the term "in a cross-sectional shape resembling the letter U having a flat bottom," described in the present specification.

Further, the corrugated metal plate is made up of respective end portions thereof, in a cross-sectional shape resembling the letter U having the flat bottom, adjacent to the inner cylinder, respective end portions thereof, in a cross-sectional shape resembling the letter U having the flat bottom, adjacent to the outer cylinder, and respective flat plate parts (indicated by x, y, z, ..., and so forth in Fig. 11(b)) interposed between both the respective end portions. As for a relationship between the corrugated metal plate, and the planar metal plate, the unit element is structured such that the outer wall surface of the flat bottom of the respective end portions, adjacent to the inner cylinder, is in contact with the planar metal plate, on a side of the unit element, adjacent to the inner cylinder, and the outer wall surface of the flat bottom of the respective end portions, adjacent to the outer cylinder, is in contact with the planar metal plate, on a side of the unit element, adjacent to the outer cylinder.

The thickness of the planer metal plate 51 my be identical to, or different from the thickness of the corrugated metal plate 52 with the respective ends in a cross-sectional shape resembling the letter U having the flat bottom. Further, a brazing process using a brazing metal may be applied to a contact region between the outer wall surface of the inner cylinder and the corrugated metal plate with the respective ends in a cross-sectional shape resembling the letter U having the flat bottom, and a contact region between the corrugated metal plate with the respective ends in a cross-sectional shape resembling the letter U having the flat bottom, and the outer cylinder, however, it is not essential to apply the brazing process thereto.

### (Supporting of a reforming catalyst on the honeycomb base member according to the aspect (5) of the present invention)

A reforming catalyst is supported on the inner surfaces of each of the cells in the honeycomb base member, in the unit element formed as above, that is, on a surface of the planar metal plate, on a surface of the corrugated metal plate with the respective ends in a cross-sectional shape resembling the letter U having the flat bottom and on a surface of the planer metal plate, respectively. As for the type of the reforming catalyst for use, and techniques for supporting the reforming catalyst, the same requirements as those in the case of (supporting of a reforming catalyst on the honeycomb base member according to the aspect (1) of the present invention) described in the foregoing will apply.

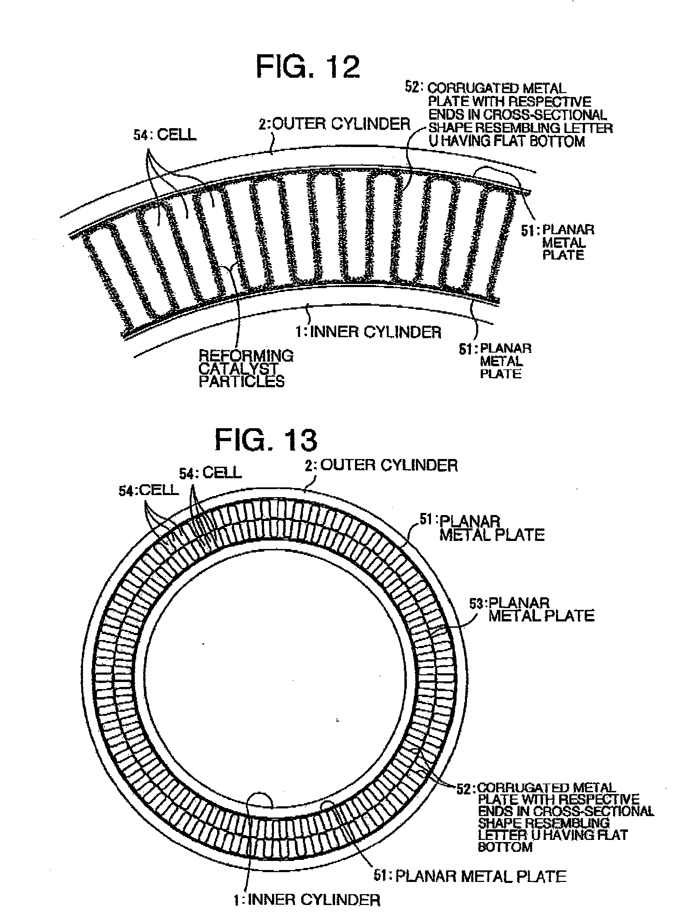

Fig. 12 is a view illustrating reforming catalyst particles in as-supported state. As shown in Fig. 12, the reforming catalyst particles are supported on the inner surfaces of each of the cells 54 made up of the planar metal plate, the corrugated metal plate with the respective ends in a cross-sectional shape resembling the letter U having the flat bottom, and the planer metal plate, making up the honeycomb base member. That is, the reforming catalyst particles are supported on the surface of the planar metal plate, the surface of the corrugated metal plate with the respective ends in a cross-sectional shape resembling the letter U having the flat bottom, and the surface of the planer metal plate, those surfaces making up the inner surfaces of each of the cells.

### (The structure of a honeycomb reforming catalyst according to the aspect (5) of the present invention)

The structure of the honeycomb reforming catalyst formed as above, in whole, and the cylindrical steam reformer having the structure of the honeycomb reforming catalyst are as shown in Figs. 10(a), 10(b), previously referred to. In the case of an example shown in Fig. 10(a), 10 (b), the diameter of the outer periphery of the inner cylinder is about 60 mm, the diameter of the inner periphery of the outer cylinder is about 75 mm, and the height of the inner cylinder as well as the outer cylinder is about 150 mm. Further, the planar metal plate, the corrugated metal plate with the respective ends in a cross-sectional shape resembling the letter U having the flat bottom, and the planer metal plate are disposed in that order between the inner cylinder and the outer cylinder. The honeycomb reforming catalyst is structured such that the reforming catalyst is supported on the respective surfaces of two sheets of the planar metal plates, and on the surface of one sheet of the corrugated metal plate with the respective ends in a cross-sectional shape resembling the letter U having the flat bottom, respectively.

In the case of the honeycomb reforming catalyst according to the aspect (5) of the present invention, and the cylindrical steam reformer having the structure of the honeycomb reforming catalyst, the diameter of the inner cylinder, the diameter of the outer cylinder, and the height of the inner cylinder as well as the outer cylinder can be set as appropriate according to a necessary production quantity of hydrogen. For example, the diameter of the outer periphery of the inner cylinder can be set in a range of 40 to 80mm, the diameter of the inner periphery of the outer cylinder in a range of 60 to 100mm, and the height thereof in a range of 100 to 200mm, as appropriate.

With the aspect (5) of the present invention, heat from the outer cylinder as well as the inner cylinder can be efficiently transferred to the reforming catalyst through the intermediary of the contact region between the outer wall surface of the inner cylinder, and the planar metal plate, the contact region between the planar metal plate, and the corrugated metal plate with the respective ends in a cross-sectional shape resembling the letter U having the flat bottom, the contact region between the corrugated metal plate with the respective ends in a cross-sectional shape resembling the letter U having the flat bottom, and the planar metal plate, and the contact region between the planar metal plate, and the inner wall surface of the outer cylinder.

### (An embodiment of a cylindrical steam reformer according to an aspect (6) of the present invention)

A cylindrical steam reformer according to the aspect (6) of the present invention is fabricated by a process comprising the steps of (a) forming a unit element comprised of an inner cylinder, an outer cylinder, and a honeycomb base member wherein a planar metal plate, a corrugated metal plate with respective ends in a cross-sectional shape resembling the letter U having a flat bottom, a planar metal plate, the corrugated metal plate with respective ends in a cross-sectional shape resembling the letter U having a flat bottom, and the planar metal plate are disposed in that order between the inner cylinder and the outer cylinder, and (b) causing a preforming catalyst to be supported on a surface of the planar metal plate, adjacent to the outer wall surface of the inner cylinder, a surface of the corrugated metal plate with the respective ends in a cross-sectional shape resembling the letter U having the flat bottom, the surface of the planar metal plate, the surface of the corrugated metal plate with the respective ends in a cross-sectional shape resembling the letter U having the flat bottom, and the surface of the planar metal plate, adjacent to the inner wall surface of the outer cylinder, making up the honeycomb base member, within the unit element.

With the aspect (6) of the present invention, there is formed the unit element comprised of the inner cylinder, the outer cylinder, and the honeycomb base member wherein the planar metal plate, the corrugated metal plate with respective ends in a cross-sectional shape resembling the letter U having a flat bottom, the planar metal plate, the corrugated metal plate with respective ends in a cross-sectional shape resembling the letter U having a flat bottom, and the planar metal plate are disposed in that order between the inner cylinder and the outer cylinder. Thus, the honeycomb base member is disposed between the inner cylinder and the outer cylinder, forming the unit element.

Fig. 13 is a view illustrating the structure of a honeycomb reforming catalyst according to the aspect (6) of the present invention, and the cylindrical steam reformer having the structure of the honeycomb reforming catalyst, Fig. 13 being a cross-sectional view corresponding to Fig. 10(b). As shown in Fig. 13, the planar metal plate 51, the corrugated metal plate 52 with the respective ends in a cross-sectional shape resembling the letter U having the flat bottom, the planar metal plate 53, the corrugated metal plate 52 with the respective ends in a cross-sectional shape resembling the letter U having the flat bottom, and the planar metal plate 51 are sequentially disposed in that order from a side of the honeycomb base member, adjacent to the inner cylinder 1, between the inner cylinder 1 and the outer cylinder 2.

As for a relationship between the aspect (6) of the present invention, and the aspect (5) of the present invention, the aspect (6) of the present invention differs from the aspect (5) of the present invention in that in the case of the aspect (5) of the present invention, use is made of one piece (on sheet) of the corrugated metal plate 52 with the respective ends in a cross-sectional shape resembling the letter U having the flat bottom, whereas in case of the aspect (6) of the present invention, two pieces (two sheets) of the corrugated metal plates 52 with the respective ends in a cross-sectional shape resembling the letter U having the flat bottom are used with one additional sheet of the planar metal plate 53 interposed therebetween. In other respects, the embodiment of the cylindrical steam reformer according to the aspect (6) of the present invention is the same as described in connection with the embodiment according to the aspect (5) of the present invention.

### (Constituent materials of the inner cylinder, the outer cylinder, and the honeycomb base member, respectively, according to any one of the aspects (1) to (6) of the present invention)

With the cylindrical steam reformer according to any one of the aspects (1) to (6) of the present invention, a ferritic stainless steel is used as the constituent material of any of the inner cylinder, the outer cylinder, and the honeycomb base member. Use of the ferritic stainless steel as the constituent material of any of the inner cylinder, the outer cylinder, and the honeycomb base member can lead to elimination of a difference in thermal expansion among the inner cylinder, the outer cylinder, and the honeycomb base member, so that a clearance can be rendered less liable to occur to spots where the inner cylinder comes into contact with the honeycomb base member, and spots where the outer cylinder comes into contact with the honeycomb base member, respectively, at the time of repetition in activation, stoppage, and activation of the cylindrical steam reformer when it is in use.

Examples of composition of the ferritic stainless steel for use as the constituent material of any of the inner cylinder, the outer cylinder, and the honeycomb base member can include the following compositions under (1) to (6) although the composition of the ferritic stainless steel is not limited thereto:
(1) Cr: 19 to 21% (mass%, applicable hereinafter), A1: 4.5 to 6.0%, C: not more than 0.15%, Si: not more than 1.00%, Mn: not more than 1.0%, P: not more than 0.0040%, S: not more than 0.030%, Ti: not more than 0.10%, the balance Fe (20Cr - 5Al);
(2) Cr: 11.50 to 14.50%, C: not more than 0.08%, Si: not more than 1.00%, Mn: not more than 1.00%, P: not more than 0.040%, S: not more than 0.040%, A1: 0.10 to 0,30%, the balance Fe (SUS405);
(3) Cr: 11.00 to 13.50%, C: not more than 0.030%, Si: not more than 1.00%, Mn: not more than 1.00%, P: not more than 0.040%, S: not more than 0.040%, the balance Fe (SUS410L);
(4) Cr: 14.00 to 16.00%, C: not more than 0. 12%, Si: not more than 1.00%, Mn: not more than 1.00%, P: not more than 0.040%, S: not more than 0.030%, the balance Fe (SUS429);
(5) Cr: 16.00 to 18.00%, C: not more than 0.12%, Si: not more than 0.75%, Mn: not more than 1.00%, P: not more than 0.040%, S: not more than 0.030%, the balance Fe (SUS430); and
(6) Cr: 25.00 to 27.50%, C: not more than 0.010%, Si: not more than 0.40%, Mn: not more than 0.40%, P: not more than 0.30%, S: not more than 0.020%, Mo: 0.75 to 1.50%, the balance Fe (SUSXM27).

### (An embodiment of an integrated cylindrical hydrogen production apparatus having a reforming catalyst layer, a CO conversion catalyst layer, and a CO removal catalyst layer, to which the cylindrical steam reformer according to any one of the aspects (1) to (6) of the present invention is applied)

The cylindrical steam reformer according to any one of the aspects (1) to (6) of the present invention is comprised of a plurality of circular cylinders including a first cylinder, a second cylinder, and a third cylinder, concentrically and sequentially disposed at intervals in increasing order of diameter, a radiation cylinder disposed inside the first cylinder so as to be coaxial thereto, a burner disposed at a central part of the radiation cylinder, in the radial direction thereof, and a reforming catalyst layer formed by filling up a gap partitioned in the radial direction, by the first cylinder and the second cylinder, with a reforming catalyst, wherein a CO conversion layer and a CO removal catalyst layer are provided in a gap between the second cylinder as the outer periphery of the reforming catalyst layer, and the third cylinder, and the CO conversion layer is suitably applicable as a reforming catalyst layer of an integrated cylindrical hydrogen production apparatus wherein the CO conversion catalyst layer is formed in a gap where the direction of a flow path is reversed at one end of the reforming catalyst layer in the axial direction thereof.

An integrated cylindrical hydrogen production apparatus described hereunder is one example however, the cylindrical steam reformer according to any one of the aspects (1) to (6) of the present invention is applicable to any integrated cylindrical hydrogen production apparatus provided that an integrated cylindrical hydrogen production apparatus has a reforming catalyst layer, a CO conversion layer, and a CO removal catalyst layer. Further, the integrated cylindrical hydrogen production apparatus to which the cylindrical steam reformer according to any one of the aspects (1) to (6) of the present invention is applied can be suitably applied to supply of hydrogen as fuel for a polymer electrolyte fuel cell.

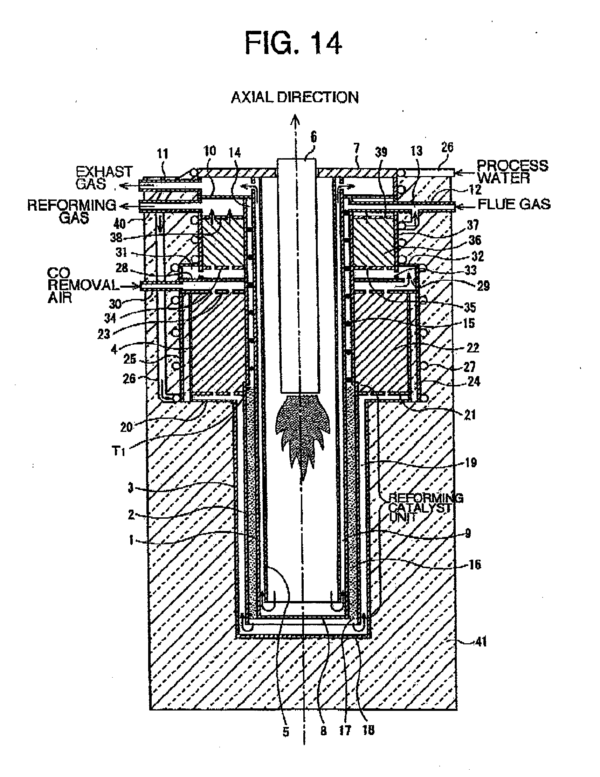

Fig, 14 is a longitudinal sectional view showing an example of the integrated cylindrical hydrogen production apparatus. As shown in Fig. 14, a first cylinder 1, a second cylinder 2, and a third cylinder 3, sequentially formed in increasing order of diameter, are concentrically disposed at regular intervals, and a fourth cylinder 4 greater in diameter than the third cylinder 3 is disposed in the upper part of the third cylinder 3. In Fig. 14, a dash and dotted line indicates a central axis thereof, and the arrow indicates the orientation of the central axis, that is, an axial orientation. A heat conduction partition wall cylindrical in shape, that is, a radiation cylinder 5 smaller in diameter than the first cylinder 1, concentrical therewith, is disposed inside the first cylinder, and a burner 6 is disposed inside the radiation cylinder 5. The burner 6 is disposed along the central axis to be fixedly attached to the inside of the radiation cylinder 5 through the intermediary of a top lid doubling as a burner-fixing mount 7.

In this connection, the first cylinder 1 corresponds to the inner cylinder 1 of the cylindrical steam reformer according to any one of the aspects (1) to (6) of the present invention, and the second cylinder 2 corresponds to the outer cylinder 2 of the cylindrical steam reformer according to any one of the aspects (1) to (6) of the present invention.

The radiation cylinder 5 is disposed in such a way as to create a gap between the lower end thereof and a bottom plate 8 of the first cylinder 1, and the space, together with a path between the radiation cylinder 5, and the first cylinder 1, communicating with the apace, forms an exhaust passage 9 for flue gases from the burner 7. The bottom plate 8 is formed in a disk-like shape of a diameter corresponding to the diameter of the first cylinder 1. The exhaust passage 9 communicates with an exhaust port 11 via an aperture between a top lid of the exhaust passage 9 (the underside surface of the top lid doubling as the burner-fixing mount 7) and a partition-wall 10 (a top lid of a preheating layer 14 to be described later on), provided in the upper part of the exhaust passage 9, and the flue gases are emitted from the exhaust part 11.

Reference numeral 12 denotes a feed pipe for a hydrocarbon raw fuel (fuel before reformation), namely, a feed pipe for a source gas. An upper part in a space between the first cylinder 1 and the second cylinder 2 is provided with the preheating layer 14, and a lower part in the space, continuing from the preheating layer 14, is provided with a reforming catalyst layer 16. One length of a round bar 15 is helically disposed inside the preheating layer 14, thereby forming one continuous helical gas passage inside the preheating layer 14. A reforming catalyst of the reforming catalyst layer 16 is held by a support plate 17, such as a porous plate, a mesh plate, or the like, provided at a lower end of the reforming catalyst layer 16.

The source gas fed from the feed pipe 12 is mixed with water (steam) in a mixing chamber 13, and is subsequently introduced into the reforming catalyst layer 16 via the preheating layer 14, whereupon the hydrocarbon raw fuel in a mixed gas is reformed by steam while descending. A reforming reaction in the preforming catalyst layer 16 being an endothermic, the reforming reaction proceeds while absorbing combustion heat generated at the burner 6. More specifically, at the time when a combustion gas generated at the burner 6 is circulated to pass through the exhaust passage 9 between the radiation cylinder 5 and the first cylinder 1, heat of the combustion gas is absorbed by the preforming catalyst layer 16, whereupon the reforming reaction proceeds.

The second cylinder 2 is disposed such that a space is provided between the lower end of the second cylinder 2, and a bottom plate 18 of the third cylinder 3, and a flow path 19 of a reforming gas is made up between the second cylinder 2, and the third cylinder 3. The bottom plate 18 is formed in the shape of a disc of a diameter corresponding to that of the third cylinder 3. The reforming gas is turned back in the space between the lower end of the second cylinder 2, and the bottom plate 18 of the third cylinder 3 to be circulated in the flow path 19 formed between the second cylinder 2, and the third cylinder 3. A fourth cylinder 4 larger in diameter than the third cylinder 3 is disposed above the third cylinder 3, and a CO conversion catalyst layer 22 is provided between the second cylinder 2, and the fourth cylinder 4.

A plate 20 (a plate in a doughnut-like shape because a portion thereof, corresponding to the diameter of the third cylinder 3, is occupied by the third cylinder 3) is disposed at the lower end of the fourth cylinder 4 as well as the upper end of the third cylinder 3, and a support plate 21 (a plate in a doughnut-like shape because a portion thereof, corresponding to the 40 diameter of the second cylinder 2, is occupied by the second cylinder 2) having a plurality of holes for gas circulation is disposed above the plate 20 with an interval provided therebetween. The CO conversion catalyst layer 22 is provided between the support plate 21, and a support plate 23 (a plate in a doughnut-like shape because a portion thereof, corresponding to the diameter of the second cylinder 2, is occupied by the second cylinder 2, as the top lid of the CO conversion catalyst layer 22) having a plurality of holes for gas circulation. The support plates 21, 23 each may be a sieve-like member made of metal, and so forth, in which case, each mesh thereof serves as a hole for gas circulation. The reforming gas having circulated through the flow path 19 is fed to the CO conversion catalyst layer 22 via the holes of the support plate 21.

As described above, the CO conversion catalyst layer 22 is provided between the second cylinder 2, and the fourth cylinder 4, and a cylinder 25 is disposed along the outer periphery of the fourth cylinder 4 with a space provided therebetween, a heat insulating material 24 being disposed in the space. A heat transfer pipe 27 continuous from a water feed pipe 26 is helically wound directly around the outer periphery of the cylinder 25. The heat transfer pipe 27 functions as a cooling mechanism for indirectly cooling the CO conversion catalyst layer 22. In the CO conversion catalyst layer 22, CO in the reforming gas is converted into carbon dioxide due to CO conversion reaction while hydrogen is concurrently generated.

The heat insulating material 24 is wound to a thickness so as to enable the CO conversion catalyst layer 22 to be evenly held at a moderate temperature without excessively lowering the temperature thereof due to cooling action of the heat transfer pipe 27. The heat transfer pipe 27 has a function for serving as a boiler of water (= process water) fed from the water feed pipe 26, and acts as one passage continuous from the water feed pipe 26, so that there does not occur localized stagnation, and the like, occurring in the case where a plurality of passages exist.

A partition plate 28 having one communicating hole 29 is provided above the support plate 23 with a predetermined interval provided therebetween, and a CO removal air is fed to a space between both the plates via an air feed pipe 30. An annular passage 31 is provided above the partition plate 28. As the communicating hole 29 has a bore having a predetermined diameter, and is only one hole, so a predetermined passing speed can be gained upon the reforming gas, and the CO removal air passing through the communicating hole 29, so that the reforming gas can be excellently mixed with the CO removal air due to a turbulent flow occurring at the time of passing through the communicating hole 29. A CO removal catalyst layer 36 is provided in a space between the second cylinder 2, and a cylinder 37 larger in diameter than the second cylinder 2, and between a support plate 34 (a plate in a doughnut-like shape because a portion thereof, corresponding to the diameter of the second cylinder 2, is occupied by the second cylinder 2) having a plurality of holes 35, and a support plate 38 (a plate in a doughnut-like shape because a portion thereof, corresponding to the diameter of the second cylinder 2, is occupied by the second cylinder 2) having a plurality of holes 39 for gas circulation, the support plates 34, 38 being disposed at the lower end, and the upper end, respectively, of the second cylinder 2 as well as the cylinder 37 with an interval provided therebetween.

The lower part of the cylinder 37 is provided with a plurality of holes 33 that are evenly spread in the circumferential direction of the cylinder 37. The annular passage 31 is a passage formed by the cylinder 25, the partition plate 28, a partition plate 32, and the cylinder 37 so as to communicate with the CO removal catalyst layer 36 via the plurality of the holes 33, and the plurality of the holes 35 of the support plate 34, and the reforming gas mixed with the CO removal air is guided into the CO removal catalyst layer 36 via the plurality of the holes 33, and the plurality of the holes 35. The CO removal catalyst layer 36 communicates with a reforming gas output pipe 40 via a gap between the support plate 38 as the top lid of the CO removal catalyst layer 36, having the plurality of the holes 39, and the partition-wall 10. Further, the CO removal catalyst layer 36 is surrounded by the cylinder 37, and a heat transfer pipe 27 continuous from the heat transfer pipe 27 on the outer periphery of the cylinder 25 is helically wound directly around the outer periphery of the cylinder 37.

The CO removal catalyst layer 36 is filled up with a CO removal catalyst (= PROX catalyst), and a CO removal reaction is performed by the PROX catalyst, whereupon CO content of the reforming gas is reduced to a ppm-level. The reforming gas after removal of CO is discharged from the plurality of the holes 39 provided in the support plate 38 as the top lid of the CO removal catalyst layer 36 to be outputted from the reforming gas output pipe 40 through a space between the support plate 38 and the partition-wall 10. A heat insulating material 41 is disposed on the outer periphery of the cylinders including the third cylinder 3, the cylinder 25, and the cylinder 37 to thereby prevent heat dissipation to outside.

### (An embodiment of an integrated cylindrical hydrogen production apparatus according to an aspect (7) of the present invention)

As previously described in connection with, for example, (the embodiment of the cylindrical steam reformer to which the honeycomb reforming catalyst according to the present invention is applied), in the integrated cylindrical hydrogen production apparatus having the reforming catalyst layer, the CO conversion catalyst layer, and the CO removal catalyst layer, a reforming catalyst unit is made up by filling up the gap between the first cylinder 1, that is, the inner cylinder, and the second cylinder 2, that is, the outer cylinder with the reforming catalyst.

The integrated cylindrical hydrogen production apparatus according to the aspect (7) of the present invention is fabricated by incorporating the cylindrical steam reformer according to any one of the aspects (1) to (6) of the present invention to be disposed in a region of the reforming catalyst unit of the integrated cylindrical hydrogen production apparatus having the reforming catalyst layer, the CO conversion catalyst layer, and the CO removal catalyst layer.

### (Embodiments)

The present invention is described in more detail hereinafter with reference to embodiments thereof, however, it goes without saying that the present invention is not limited thereto.

A cylindrical steam reformer wherein the granular reforming catalyst as shown Figs. 1(a), 1(b) was disposed, a cylindrical steam reformer wherein the conventional honeycomb reforming catalyst as shown Figs. 2(a), 2(b) was disposed, and a cylindrical steam reformer wherein the honeycomb reforming catalyst according to the present invention, as shown in Figs. 6(a) to 6(c), was disposed were fabricated to be put to use, whereupon a performance test was conducted on each of the cylindrical steam reformers. Test conditions, and test results are as described in the attached Table 1.

In Table 1, the cylindrical steam reformer wherein the granular reforming catalyst was disposed is referred to as Comparative Example 1, and the cylindrical steam reformer wherein the conventional honeycomb reforming catalyst was disposed as Comparative Example 2 while working examples of the cylindrical steam reformer wherein the honeycomb reforming catalyst comprised of the zigzag metal plates, and the planar metal plates, according to the present invention, was disposed are referred to as Embodiments 1, 2, respectively. Embodiment 2 represents the case of the cylindrical steam reformer according to the present invention, identical in structure to the cylindrical steam reformer according to Embodiment 1 except that the size of the honeycomb reforming catalyst differs in respect of the inside diameter, outside diameter, and height direction thereof. With any of Comparative Examples 1, 2 and Embodiments 1, 2, Ru metal was used for a reforming catalyst, and alumina was used as a carrier.

The cylindrical steam reformer according to Comparative Example 1 was fabricated with the use of a granular reforming catalyst of average grain size (diameter) ≒ 3mm, as shown in Figs. 1(a), 1(b). The cylindrical steam reformer with the use of the conventional honeycomb reforming catalyst, according to Comparative Example 2, was fabricated, as shown in Figs. 2(a), 2(b). The cylindrical steam reformers with the use of the honeycomb reforming catalyst, according to Embodiments 1, 2, respectively, were fabricated as shown in Figs. 3(a) - 3(c) to 6(a) - 6(c).

In Table 1, in the case of Comparative Examples 1, 2 as well as Embodiments 1, 2, a heat transfer area is equal to an area of the outer wall surface of the inner cylinder. Although heat transfer is conducted from the inner wall surface of the outer cylinder as well, heat transfer is mainly conducted from the outer wall surface of the inner cylinder, and therefore, the area of the outer wall surface of the inner cylinder is used as a guide in the present performance test- In Table 1, in the case of Comparative Examples 1, 2 as well as Embodiments 1, 2, a volume of the reforming catalyst unit represents a volume of a gap between the outer wall surface of the inner cylinder and the inner wall surface of the outer cylinder, where a reforming catalyst is disposed.

Further, any of sample Nos. 1, 2 of Comparative Example 1, sample Nos. 1, 2 of Comparative Example 2, and sample Nos. 1, 2 of Embodiment 1 represents the case of operation carried out under different conditions in respect of a flow rate of a raw material 13A, and an S/C ratio although the scale of a system as the cylindrical steam reformer was the same.

For a hydrocarbon raw fuel, use was made of a city gas (13A) after desulfurization, and with any of the cylindrical steam reformers in the cases of Comparative Examples 1, 2, and Embodiments 1, 2, repectively, a temperature sensor was set up at an inlet and an outlet of the reforming catalyst unit, respectively, thereby measuring an operating temperature.

**Table 1**

| | Conventional Granular Reforming Catalyst | | | Conventional Honeycomb Reforming Catalyst | | New Honeycomb Reforming Catalyst | | |
|---|---|---|---|---|---|---|---|---|
| | Comparative Example 1 | | | Comparative Example 2 | | Embodiment 1 | | Embodiment 2 |
| No. | 1 | 2 | 3 | 1 | 2 | 1 | 2 | 1 |
| Heat Transfer Area (cm²) | 542 | | 437 | 542 | | 403 | | 271 |
| Volume of Reforming Catalyst Unit (cc) | 379 | | 190 | 379 | | 183 | | 181 |
| Flow of Law 13A (L/min) | 4.12 | 4.10 | 4.00 | 4.15 | 4.15 | 4.00 | 4.00 | 3.00 |
| S/C | 268 | 2.60 | 3.20 | 2.58 | 2.68 | 2.88 | 307 | 2.85 |
| Temp. at Inlet of Reforming Catalyst Unit (°C) | 403.2 | 410.3 | 419.7 | 412.2 | 403.6 | 423.8 | 36.6 | 439.3 |
| Temp. at Outlet of Reforming Catalyst Unit (°C) | 664.3 | 680.9 | 708 1 | 692.9 | 688.4 | 692.9 | 676.2 | 681.5 |
| CH₄ Conversion (%) | 91.59 | 90.67 | 74.76 | 90.21 | 90.47 | 92.10 | 91 19 | 87.68 |

| | | | | | | | | |
|---|---|---|---|---|---|---|---|---|
| (Remarks): It was planed to reach the CH₄ conversion at 90% or more. Comparative Example 1: The cylindrical steam reformer having a structure of Fig. 1 (a), 1(b). Comparative Example 2: The cylindrical steam reformer having a structure of Fig. 2 (a), 2(b). Embodiment 1-2: The cylindrical steam reformer having a structure of Fig. 6 (a) to 6(c). Raw 13A: City gas (desulfurized) on the market | | | | | | | | |

As shown in Table 1, with any of sample Nos. 1, 2 of Comparative Example 1, sample Nos. 1, 2 of Comparative Example 2, and sample Nos. 1, 2 of Embodiment 1, the CH₄ conversion is found at around 90%. The heat transfer area was 542cm² in the case of sample Nos. 1, 2 of Comparative Example 1 as well as sample Nos- 1, 2 of Comparative Example 2, whereas the heat transfer area was 403cm² in the case of sample Nos. 1, 2 of Embodiment 1. This demonstrates that the heat transfer from the inner cylinder in the case of sample Nos- 1, 2 of Embodiment 1 was more excellently conducted as compared with the heat transfer from the inner cylinder in the case of sample Nos. 1, 2 of Comparative Example 1 as well as sample Nos. 1, 2 of Comparative Example 2.

Further, in the case of sample No. 3 of Comparative Example 1, the heat transfer area, and the volume of the reforming catalyst unit, are substantially the same as those in the case of sample Nos. 1, 2 of Embodiment 1, however, CH₄ conversion of sample No. 3 of Comparative Example 1 is found significantly lower as compared with those for sample Nos. 1, 2 of Embodiment 1. This is presumably because of a decrease in heat transfer amount, due to the film resistance, and so forth, attributable to use of the granular reforming catalyst.

Furthermore, in the case of Embodiment 2, a heat transfer area, and a volume of a reforming catalyst unit were smaller as compared with those for Embodiment 1, however, Embodiment 2 as well indicated CH₄ conversion comparable to the CH₄ conversion according to Embodiment 1. This demonstrates that in the case of the cylindrical steam reformer provided with the honeycomb reforming catalyst according to the present invention, the scale of a system has little effect on the heat transfer amount.

## Claims

1. A cylindrical steam reformer wherein a honeycomb reforming catalyst is disposed in a clearance between an inner cylinder and an outer cylinder, making up a double cylinder, the honeycomb reforming catalyst being formed by causing a reforming catalyst to be supported on a honeycomb base member, said cylindrical steam reformer being fabricated by a process comprising the steps of:
(a) forming a unit element comprised of an inner cylinder, an outer cylinder, and a honeycomb base member wherein a planar metal plate, a corrugated metal plate with respective ends in a cross-sectional shape resembling the letter U having a flat bottom, and a planar metal plate are disposed in that order between the inner cylinder and the outer cylinder; and
(b) causing a reforming catalyst to be supported on a surface of the planar metal plate adjacent to the outer wall surface of the inner cylinder, a surface of the corrugated metal plate with the respective ends in a cross-sectional shape resembling the letter U having the flat bottom, and a surface of the planar metal plate adjacent to the Inner wall of the outer cylinder, making up the honeycomb base member, within the unit element.

2. A cylindrical steam reformer wherein a honeycomb reforming catalyst is disposed in a clearance between an inner cylinder and an outer cylinder, making up a double cylinder, the honeycomb reforming catalyst being formed by causing a reforming catalyst to be supported on a honeycomb base member, said cylindrical steam reformer being fabricated by a process comprising the steps of:
(a) forming a unit element comprised of an inner cylinder, an outer cylinder, and a honeycomb base member wherein a planar metal plate, a corrugated metal plate with respective ends in a cross-sectional shape resembling the letter U having a flat bottom, and a planar metal plate are disposed in that order between the inner cylinder and the outer cylinder; and
(b) causing a reforming catalyst to be supported on a surface of the planar metal plate adjacent to the outer wall surface of the inner cylinder, a surface of the corrugated metal plate with the respective ends in a cross-sectional shape resembling the letter U having the flat bottom, a surface of the planar metal plate, a surface of the corrugated metal plate with the respective ends in a cross-sectional shape resembling the letter U having the flat bottom, and a surface of the planar metal plate adjacent the inner wall surface of the outer cylinder, making up the honeycomb base member, within the unit element.

3. The cylindrical steam reformer according to claim 1 or 2, wherein a ferritic stainless steel is used as the constituent material of the inner cylinder, the honeycomb base member, and the outer cylinder, respectively.

4. An integrated cylindrical hydrogen production apparatus having a reforming catalyst layer, a CO conversion catalyst layer, and a CO removal catalyst layer wherein the cylindrical steam reformer according to any one of claims 1 to 3 is incorporated in the integrated cylindrical hydrogen production apparatus so as to serve as the reforming catalyst layer thereof.

5. The integrated cylindrical hydrogen production apparatus according to claim 4, wherein the integrated cylindrical hydrogen production apparatus supplies hydrogen to a polymer electrolyte fuel cell.
